(19) Europäisches Patentamt
European Patent Office
Office européen des brevets

(11) **EP 4 325 880 B1**

(12) **EUROPEAN PATENT SPECIFICATION**

(45) Date of publication and mention
of the grant of the patent:
**22.10.2025 Bulletin 2025/43**

(21) Application number: **22191207.4**

(22) Date of filing: **19.08.2022**

(51) International Patent Classification (IPC):
**H04N 23/88** (2023.01)

(52) Cooperative Patent Classification (CPC):
**H04N 23/88**

(54) **CAMERA SENSOR-TO-SENSOR COLOR SPACE MAPPING**

KAMERA-SENSOR-ZU-SENSOR-FARBRAUMABBILDUNG

MAPPAGE DE L'ESPACE COULEUR ENTRE CAPTEURS DE CAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.02.2024 Bulletin 2024/08**

(73) Proprietor: **Beijing Xiaomi Mobile Software Co.,
Ltd.
Beijing 100085 (CN)**

(72) Inventors:
• **Uzunov, Vladislav**
**33720 TAMPERE (FI)**
• **Nikkanen, Jarno**
**33720 TAMPERE (FI)**
• **Kotka, Janne**
**33720 TAMPERE (FI)**

(74) Representative: **Dompatent
Partnerschaft von Patent- und Rechtsanwälten
mbB
Deichmannhaus am Dom
Bahnhofsvorplatz 1
50667 Köln (DE)**

(56) References cited:
**US-A1- 2004 197 020      US-B1- 6 430 313**

• **RANG NGUYEN HO MAN ET AL: "Raw-to-Raw:
Mapping between Image Sensor Color
Responses", 2014 IEEE CONFERENCE ON
COMPUTER VISION AND PATTERN
RECOGNITION, IEEE, 23 June 2014 (2014-06-23),
pages 3398 - 3405, XP032649558, DOI: 10.1109/
CVPR.2014.434**

EP 4 325 880 B1

**Description**

The present invention relates to a camera sensor-to-sensor color space mapping based on multi-matrix tiling and in particular it relates to a method to determine a mapping relation for image processing. Further, the present invention relates to a method for image processing using such a mapping relation. Further, as application of the image processing, the present invention relates to a method for training an image processing module and a method for capturing an image.

**Background**

In photography and image processing, Auto White Balance (AWB) is the process of globally adjusting the colors in an image to remove any undesired color cast, shed by the illuminating light source, thus playing a key role in camera color image quality. Current state-of-the-art AWB algorithms are based on Artificial Intelligence (AI) and learn to estimate correctly the color cast of the scene by a training procedure on a large dataset, often captured by multiple cameras with different color sensitivity characteristics. When ported to various products from the same vendor, the same AWB algorithm must perform equally well, being indifferent to the camera sensor used in the product. This is a challenge especially for AI-based algorithms, because the spectral sensitivities of the color channels differ significantly from one camera sensor model to another. This produces different raw image responses from different sensors for the same scene and illumination conditions. Many AWB algorithms are indifferent to sensor-to-sensor changes in the raw sensor response, but the AI-based algorithms are especially sensitive to their input as they try to identify familiar feature factors during the estimation process. Moreover, during the learning process, an AI algorithm would require a great amount of training data, which must span as completely as possible the range of the algorithm use cases. Thus, it would be impractical to recollect training data for each new camera product. Also, there are publicly available datasets for algorithms like AWB which have been captured by quite different camera sensors, including both mobile cameras and DSLRs. Therefore, it is essential to have a method which maps the raw image captured with one camera sensor to another raw image with color channel values as if the scene was captured by another camera sensor. This way all raw image data captured with different camera sensors could be mapped to a common target sensor color space and used during the learning and the inference phases of the AWB algorithm. Raw images are commonly described as arrays of color pixel tristimulus values, commonly denoted as an array of triplets $[R, G, B]$. If we denote a color sensed by one camera as a triplet $[R_c, G_c, B_c]$ and the same color sensed by the target camera as another triplet $[R_t, G_t, B_t]$, the considered problem can be formalized as to find the mapping $\mathcal{M}\{\cdot\}$ such that the following equation is valid for all possible colors which form pairs of triples $([R_c, G_c, B_c] \leftrightarrow [R_t, G_t, B_t])$:

$$[R_t, G_t, B_t] = \mathcal{M}\{[R_c, G_c, B_c]\} \qquad (1)$$

In a further level of abstraction, the mapping $\mathcal{M}\{\cdot\}$ maps the source camera space constituting of all possible triplets $[R_c, G_c, B_c]$ to the target camera space constituting of all possible triplets $[R_t, G_t, B_t]$. The color space mapping method must exhibit the following properties:

i. it provides as accurate as possible mapping from one sensor to another;
ii. it does not require preliminary knowledge of the scene illuminant as this is unavailable before the subsequent AWB algorithm;
iii. it can be estimated based only on the sensor characteristics of the capture camera and the target camera, e.g. measured spectral sensitivities of the color channels;
iv. it must be inexpensive to apply during run-time in a product as it acts only as preprocessing step to the actual AWB algorithm.

The considered technical problem is still quite recently identified in the field of AWB algorithms. It appeared only recently together with the AI-based solutions for AWB. Even though the numerical experiments clearly indicate that any preliminary color mapping is beneficial for a subsequent AI-based AWB, many AWB works still overlook the problem. Nevertheless, the considered problem is relevant to any product with cameras using a high-quality ISP technology, as these are likely to use an AI-based AWB solution in order to get best color cast estimation. Therefore, the current solution is potentially relevant to any high-end product where cameras and picture quality are a key component, e.g. smartphones.
Traditionally, color space mapping is a late color processing stage in an ISP chain which prepares the image for display. It is commonly done by estimating the operator $\mathcal{M}\{\cdot\}$ as a 3x3 matrix which maps input image color space $[R_c, G_c, B_c]$ to a perceptual color space like standard RGB or CIE XYZ. This, or a similar approach is adopted by some works, however in each case there are practical inconveniences or otherwise general mapping inaccuracy. Accuracy could be improved by increasing significantly the computational burden during the run-time or by other impractical assumptions made during the estimation process. Below, the most relevant works are listed in order of similarity to the proposed method.

In Shao-Bing Gao, Ming Zhang, Chao-Yi Li, and Yong-Jie Li, "Improving color constancy by discounting the variation of camera spectral sensitivity", Journal of the Optical Society of America A, 34(8): 1448, 2017, the authors consider a single 3x3 matrix as a mapping relation. The 3x3 matrix estimate is a Least Squares (LS) solution of a linear formulation obtained from the measured spectral sensitivities of the camera sensors and the known spectral reflectances of a set of color patches. This approach satisfies all necessary properties for a mapping listed in section 1.1 besides property (i). The LS solution is usually suboptimal as it only finds the best fit on the average between the input and target data, often making equal compromise for all equations in the system. Or, it could be found a good fit only for some parts of the input sensor space which are more densely populated with data. Finally, the authors use 1995 patches with 10 illuminants which is unlikely to sample well the whole space of all possible colored material under all possible illuminants.

The work of Mahmoud Afifi and Michael S. Brown "Sensor-Independent Illumination Estimation for DNN Models", in British Machine Vision Conference, 2019 also estimates a 3x3 Camera Transform Matrix (CTM) as in Shao Bing-Gao et al. to transform every image that is fed to the AWB algorithm neural network. However, here the CTM estimate is not preliminary computed based on the sensor characteristics, but it is estimated on the fly during run-time using a 3-layer Convolutional Neural Network (CNN). Thus, the CTM differs for each input image in the general case. The network implicitly learns how to map each input image, captured by arbitrary camera sensor, to a non-perceptual, sensor-independent working space. After applying the CTM on the input image, the mapped image is fed to another 3-layer CNN which estimates the illuminant color cast. The training of the two networks happens from end-to-end as a whole, optimizing for the accuracy of the illuminant estimate. Hence, the control of the CTM mapping accuracy could be lost in this automated fashion and generalization to new images and sensors could be problematic. Moreover, the illuminants and images in the dataset are expected to sample the input and output sensor spaces even to a smaller extent than the work in Shao Bing-Gao et al. Another drawback is that an input image might have quite a large variety of colors which would be very difficult to be mapped accurately by a single 3x3 CTM.

Another solution is presented by Rang Nguyen, Dilip K. Prasad, and Michael S. Brown, "Raw-to-raw: Mapping between image sensor color responses", in IEEE Computer Vision and Pattern Recognition, 2014 and Hakki Can Karaimer and Michael S. Brown, "Improving color reproduction accuracy on cameras", in IEEE Computer Vision and Pattern Recognition, June 2018. Both works use similar mapping estimation approach as Shao Bing-Gao et al. from a set of measured spectral reflectances and a set of standard illuminants power spectrum distributions, but in a different fashion. In Rang Nguyen et al. they study a number of mappings beyond a simple 3x3 CTM. The mapping could be also 3x4 CTM mapping the augmented $[R_c, \ G_c, \ B_c, \ 1]_k$ vector, 3x9 matrix mapping the polynomial cross-terms $[R_c, G_c, B_c, R_c B_c, G_c B_c, R_c G_c, R_c^2, G_c^2, B_c^2]_k$ , a radial basis functions decomposition model or a Gaussian regression model. Each of these mappings can be done as a single model for all illuminants, or, as a separate model for a small set of illuminants. In Hakki Can Karaimer et al., the authors calculate a set of three 3x3 CTMs for three separate illuminants and interpolate between the pre-computed CTMs based on the CCT of the input image. As these are illuminant-specific solutions, they are expected to be more accurate than the solution in Shao Bing-Gao et al. However, the input image is supplemented with some preliminary pilot estimate of the illuminant or another measurement of the illuminant like the CCT. The single mapping versions in Rang Nguyen et al. suffers similar deficiencies as the solution in Shao Bing-Gao et al., despite having options for a more advanced mapping than a simple 3x3 CTM. On top of that, the models are calculated from a much smaller number of standard patches and illuminants than Shao Bing-Gao et al., thus far less likely to sample well the capture sensor color space.

A recent work by Samu Koskinen, Dan Yang, and Joni-Kristian Kamarainen, "Cross-dataset Color Constancy Revisited Using Sensor-to-Sensor Transfer", In British Machine Vision Conference, September 2020 on the sensor-to-sensor invariance for AI-based AWB reports superior quality results by using completely different approach than a standard space-to-space mapping. They propose a method where the raw image from the capture sensor is mapped to a spectral image, then refined and mapped onto the target camera sensor. Each of the initial and refinement stage of the mapping from the raw image to the spectral image require solving an optimization problem over a large discrete space, defined by a preliminary available dataset. It is questionable in this approach how well the dataset samples the space of the hyper-spectral images which are expected to occur in all possible practical situations. The major disadvantage here is the search and refinement in the space of the dataset, which is done by two computationally intensive optimization routines. Thus, the practical run-time application of this approach could be rather limited.

## Summary

It is an object of the present invention to provide an improved method overcoming the shortcomings of the prior art.

The problem is solved by a method to determine a mapping relation for image processing according to claim 1, a method for image processing according to claim 11, a method for training an image processing module of a camera according to claim 12 as well as a method for capturing an image according to claim 13. Further, the aforementioned problem is solved by an apparatus according to claim 14.

In a first aspect a method to determine a mapping relation for image processing is provided. The method comprises the steps:

Providing a plurality of color patch spectral reflectances $R_i(\lambda)$, $i = 1 ... C$, and a plurality of illuminant power spectrum distributions $I_j(\lambda)$, $j = 1...L$, where $\lambda$ denotes the wavelength of light;
Providing capture sensor channel spectral sensitivities $S_{R,c}(\lambda)$, $S_{G,c}(\lambda)$ and $S_{B,c}(\lambda)$;
Providing target sensor channel spectral sensitivities $S_{R,t}(\lambda)$, $S_{G,t}(\lambda)$ and $S_{B,t}(\lambda)$;
Determining from the color patch spectral reflectances $R_i(\lambda)$, the illuminant power spectrum distributions $I_j(\lambda)$ and the capture sensor channel spectral sensitivities $S_{R,c}(\lambda)$, $S_{G,c}(\lambda)$ and $S_{B,c}(\lambda)$ capture sensor color channel responses $[R_c, G_c, B_c]_k$, $k = 1... K$; and
Determining the mapping relation from the color patch spectral reflectances $R_i(\lambda)$, the illuminant power spectrum distributions $I_j(\lambda)$ and the target sensor channel spectral sensitivities $S_{R,t}(\lambda)$, $S_{G,t}(\lambda)$ and $S_{B,t}(\lambda)$ target sensor color channel responses $[R_t, G_t, B_t]_k$, $k = 1 ... K$;
wherein the mapping relation comprises a plurality of mapping functions; and wherein each mapping function is determined by a mapping from the capture sensor color channel responses $[R_c, G_c, B_c]_k$ to the target sensor color channel responses $[R_t, G_t, B_t]_k$, $k = 1... K$.

Thus, by the present invention a mapping relation as plurality of mapping functions is determined from the capture sensor color channel responses and the target sensor color channel responses. Different capture sensors have different channel spectral sensitivities, leading to different capture sensor channels, and therefore also capture sensor color channel responses. By the present invention mapping color information from one capture sensor to the target sensor is enabled.

In computational color science there exists publicly available datasets where the spectral reflectances $R_i(\lambda)$, $i = 1 ... C$ of a number of colored material patches have been measured. Moreover, the power spectra distribution $I_j(\lambda)$, $j = 1 ...L$ of standard illuminants are also well known and available.

The solution of the present invention solves all important points (i) - (iv) listed above. It is more accurate than any (semi-) global mapping method of Shao Bing-Gao et al., Rang Nguyen et al., Hakki Can Karaimer et al. and Mahmoud Afifi et al. as it does not use the same mapping neither for the whole input image, nor for all images under specific illuminant, nor for all images from a specific sensor. It does not require any preliminary knowledge on the illuminant as in Rang Nguyen et al. and Hakki Can Karaimer et al. It can be estimated based on the input and target camera spectral characterizations and in fact uses much wider variety of spectral patch and illumination data in order to sample the color spaces of the cameras densely and as completely as possible. It is not too complex to apply in real time and still provides sufficient accuracy compared to the global methods of Shao Bing-Gao et al., Rang Nguyen et al. and Hakki Can Karaimer et al.

Preferably, for one or more of the capture color channel responses $[R_c, G_c, B_c]_k$ and one or more of the target color channel responses $[R_t, G_t, B_t]_k$ having a similar color information, a common mapping function is determined. Therein, similar color information refers to a color information with a difference smaller than a predetermined threshold $\Delta_{tile}$. Thus, for color channel responses (either capture color channel responses or target color channel responses) being similar, the same mapping function is determined. Thus, for the mapping relation a reduced number of mapping functions is sufficient in order to cover the whole or a sufficient area of the color space. Similar color channel responses are mapped by the same mapping function. On the one hand, by reducing the number of necessary mapping functions, computational efforts are reduced decreasing the accuracy. On the other hand, by selecting the predetermined threshold $\Delta_{tile}$ a sufficient accuracy can still be maintained. Further, it is possible due to the reduced number of mapping functions to predetermine the mapping functions in advance. A calculation of the mapping function during runtime of the image processing is not necessary.

According to the present invention, a 2D color space is defined and the 2D color space is divided into tiles. Therein, the tiles are preferably non-overlapping. Furthermore, the tiles may have different or equal shapes. More preferably, the tiles are squares which divide the 2D color space. Therein, each capture sensor color channel response $[R_c, G_c, B_c]_k$ and each target color channel response $[R_t, G_t, B_t]_k$ are assigned to one tile. For each tile one mapping function is determined. If the capture sensor color channel response falls into one of the tiles in the 2D color space, this color channel response is assigned to the respective tile and consequently to the mapping function relating to this specific tile. Therein, preferably the 2D color space is defined by eliminating the lightness from the RGB-color space in particular by dividing the red and blue components by the green component. In this case the 2D color space is spanned by $[R/G, B/G]$.

Preferably, the method according to any of claims 1 to 3, wherein the capture sensor color channel response $[R_c, G_c, B_c]_k$ is calculated by $[R_c, G_c, B_c]_k = [\int S_{R,c}(\lambda) \cdot P_k(\lambda)d\lambda, \int S_{G,c}(\lambda) \cdot P_k(\lambda)d\lambda, \int S_{B,c}(\lambda) \cdot P_k(\lambda)d\lambda]$, $k = 1 ... K$ and wherein the target sensor color channel response $[R_t, G_t, B_t]_k$ is calculated by $[R_t, G_t, B_t]_k = [\int S_{R,t}(\lambda) \cdot P_r(\lambda)d\lambda, \int S_{G,t}(\lambda) \cdot P_r(\lambda)d\lambda, \int S_{B,t}(\lambda) \cdot P_k(\lambda)d\lambda]$, $k = 1...K$, with $P_k(\lambda) = R_i(\lambda) \cdot I_j(\lambda)$, $i = 1,...,C$, $j = 1,...,L$, $k = 1...K$, $K = C \cdot L$.

If the spectral sensitivities of the camera color channels $S_R(\lambda)$, $S_G(\lambda)$ and $S_B(\lambda)$ are also measured, then the triplets $[R, G, B]_k$, $k = 1 \ldots K$ representing all colored patches under all illuminants can be computed according to the equation:

$$[R, G, B]_k = \left[\int S_R(\lambda).P_k(\lambda)d\lambda, \int S_G(\lambda).P_k(\lambda)d\lambda, \int S_B(\lambda).P_k(\lambda)d\lambda\right], \quad k = 1 \ldots K,$$

$$(2)$$

where $P_k(\lambda) = R_i(\lambda).I_j(\lambda)$. Equation (2) can be used to compute a set of triplets $[R_c, G_c, B_c]_k$, $k = 1 \ldots K$ for the capture camera sensor and a corresponding set of triplets $[R_t, G_t, B_t]_k$, $k = 1 \ldots K$ for the target camera sensor. The two sets can be used to form a system of equation for the mapping $\mathcal{M}\{\cdot\}$.

Preferably, the method according to any of claims 1 to 4, wherein a linear system of equations is obtained for the mapping function $CTM_{m,n}$:

$$\begin{bmatrix} [R_c, G_c, B_c]_{k_1} \\ [R_c, G_c, B_c]_{k_2} \\ \vdots \end{bmatrix} . CTM_{m,n} = \begin{bmatrix} [R_t, G_t, B_t]_{k_1} \\ [R_t, G_t, B_t]_{k_2} \\ \vdots \end{bmatrix}$$

with $k = k_1, k_2, \ldots$ indicating the capture sensor color channel responses $[R_c, G_c, B_c]_k$ and target sensor color channel responses $[R_t, G_t, B_t]_k$ assigned to the same mapping function in particular falling in the same tile of the 2D color space, wherein the linear system of equations is solved to obtain the mapping function $CTM_{m,n}$.

Thus, each capture sensor color channel response for a certain tile denoted by the coordinates $m,n$ are stacked. Similar, for the same tile all target sensor color channel responses $[R_t, G_t, B_t]_k$ are stacked leading to a linear system of equations, from which mapping function $CTM_{m,n}$ is obtained.

Preferably, if there are less than nine capture sensor color channel responses $[R_c, G_c, B_c]_k$ and target sensor color channel responses $[R_t, G_t, B_t]_k$ assigned to the same mapping function $CTM_{m,n}$, the mapping function is replaced by a global mapping function $CTM_{Global}$. For the case when the $CTM_{m,n}$ is a 3x3 matrix, the linear system of equations mentioned above requires at least 9 equations. Consequently, at least 9 capture sensor color channel responses and target sensor color channel responses need to be assigned to the respective tile. If this is not the case, the linear system of equations is underdetermined and its solution is unlikely to be meaningful. In this case the mapping function $CTM_{m,n}$ is replaced by a global mapping function $CTM_{Global}$ used for mapping.

Preferably, each mapping function is a 3x3 matrix.

Preferably, mapping functions corresponding to neighboring capture sensor color channel responses $[R_c, G_c, B_c]_k$ and target sensor color channel responses $[R_t, Gt, B_t]_k$, and in particular neighboring tiles in the 2D color space are made continuous. Thus, there are no steps or unwanted jumps between mapping functions when going from one tile to the neighboring tile.

Preferably, continuity between two neighboring mapping functions is provided by minimizing one or more of scaling, rotating and reflecting of one or more of the mapping functions.

Preferably, for scaling continuity a difference matrix $D_{m,n-1 \leftrightarrow m,n} = CTM_{m,n}CTM_{m,n-1}^{-1}$ is determined. A singular value decomposition (SVD) is applied to the difference matrix $D_{m,n-1 \leftrightarrow m,n}$ to determine

$$D_{m,n-1 \leftrightarrow m,n} = USV^T = U\begin{bmatrix} s_1 & & \\ & s_2 & \\ & & s_3 \end{bmatrix}V^T \quad \text{where } s_1, s_2 \text{ and } s_3 \text{ are the singular values and } U \text{ and } V^T \text{ are}$$

orthonormal matrices representing rotation. Then, by $s = \sqrt[3]{\max(s_1, 1/s_1).\max(s_2, 1/s_2).\max(s_3, 1/s_3)}$ a scaling vector on all three components of the color vector is provided. This scaling vector is minimized in order to maintain scaling continuity between two tiles in the 2D color space.

Preferably, the rotation angle $\varphi$ of the rotation of the respective mapping function $CTM_{m,n}$ can be determined by $\varphi = \left|\cos^{-1}\left(\frac{trace(UV^T)-1}{2}\right)\right|$, wherein $UV^T$ are determined by applying a single value decomposition (SVD) to the difference matrix $D_{m,n-1 \leftrightarrow m,n}$. In order to maintain continuity between the mapping functions of different tiles or similar color information, the rotation angle $\varphi$ is minimized.

Preferably, reflection is determined by $reflection = det(D_{m,n-1 \leftrightarrow m,n})$, wherein the determinant of the difference matrix $D_{m,n-1 \leftrightarrow m,n}$ is minimized in order to maintain continuity between mapping functions of two neighboring tiles or similar color information.

Preferably, continuity is provided between one mapping function and all neighboring mapping functions, i. e. all surrounding tiles in the 2D color space.

Preferably, for a sensor chip model the mapping relation is precalculated only once. Thus, for a specific chip model the mapping relation is calculated and then can be used for this specific sensor chip for image processing. No re-calculation of the mapping relation is necessary and in particular it is not necessary to calculate the mapping relation during runtime.

Preferably, the mapping relation and in particular the mapping functions $CTM_{m,n}$ are stored preferably in a Look-Up Table (LUT). Thus, by the look-up table, the mapping functions $CTM_{m,n}$ can be easily obtained, thereby reducing the computational efforts during image processing.

In a further aspect of the present invention, a method for image processing is provided. The method comprises the steps:

Providing an initial image having a plurality of pixels, wherein each pixel comprises a color information, wherein the initial image is captured by a capture sensor;

Providing a mapping relation including a plurality of mapping functions, wherein the mapping relation is determined as previously described for a target sensor;

Selecting for each pixel a mapping function according to the color information of the respective pixel; and

Applying the respective mapping function to each of the pixel to generate a mapped image.

Therein, the color information is the capture sensor color channel response of the capturing image sensor. Therein, the capture sensor is part of the apparatus for image processing or can be a separate device, wherein the captured image is provided in particular together with the capture sensor channel spectra sensitivities. Thus, by the method for image processing according to the present invention, the initial image of the capture sensor is mapped into the color space of the target sensor by the mapping relation.

Preferably, the pixel information is transferred to 2D color space, wherein a mapping function is selected according to the pixel information in the 2D color space.

Preferably, a 2D color space is defined and the 2D color space is divided into tiles. Therein, the tiles are preferably non-overlapping. Furthermore, the tiles may have different or equal shapes. More preferably, the tiles are squares which divide the 2D color space. Therein, each capture sensor color channel response $[R_c, G_c, B_c]$ and each target color channel response $[R_t, Gt, Bt]$ are assigned to one tile. For each tile one mapping function is determined. If the capture sensor color channel response falls into one of the tiles in the 2D color space, this color channel response is assigned to the respective tile and consequently to the mapping function relating to this specific tile. Therein, preferably the 2D color space is defined by eliminating the lightness from the RGB-color space in particular by dividing the red and blue components by the green component. In this case the 2D color space is spanned by $[R/G, B/G]$.

In a further aspect, the present invention relates to a method for training an image processing module of a camera having a target sensor. The method comprises:

Providing a plurality of training images captured with a capture sensor,

Process the plurality of training images according to the method for image processing as described above to acquire final training images,

Training of the image processing module with the final training images.

Thus, by the present invention, irrespective of the capture sensor capturing the training images, all training images can be transferred to an invariant color space, wherein the training of the image processing module with the final training images is carried out. Thus, deviations in the training images due to the capture sensors used for capturing the different training images is avoided and a more reliable training of the image processing module is possible.

In a further aspect of the present invention, a method for capturing an image is provided. The method comprises the steps of:

Capturing an image by a capture sensor,

Process the captured image according to the method for image processing as previously described to acquire a corrected image, wherein the target sensor is the sensor for that an image processing module has been trained,

Apply an image processing to the corrected image by the trained image processing module,

Apply an inverse of the mapping relation to generate a processed image or apply an inverse of the mapping relation to an Automatic White Balancing (AWB) result, which is used to calculate the white balancing gains for correcting the captured image.

Therein, the capture sensor is different from the target sensor. Thus, irrespective of the used capture sensor capturing the image, the image processing module can be used to apply an image processing. In this regard, the captured image captured by the capture sensor is transferred into the color space of the trained image processing module, i. e. into the color space of the training images used for training of the image processing module. Then, by the trained image processing module the image is processed. Afterwards an inverse of the mapping relation is applied to the processed image to revert back to the color space of the capture sensor in order to generate the processed image. Alternatively, in particular for the case that image processing is AWB, an inverse of the mapping relation is applied to the AWB result, which is used to obtain the white balancing gains for processing the captured image in the capture sensor space.

Preferably, the image processing module is an Auto White Balancing (AWB) module.

In a further aspect of the present invention an apparatus is provided comprising a processor and a memory, wherein the memory stores instructions, when carried out by the processor and performs the steps of the method described above.

**Description of Figures**

In the following, the present invention is described in more detail with reference to the accompanying figures.

The figures show:

Figure 1 a schematic flow-diagram of a method according to the present invention,

Figure 2 a schematic flow-diagram of a method according to the present invention,

Figure 3 tiling of a 2D color plane,

Figure 4 representation of the image processing method according to the present invention,

Figure 5A exemplary spectral reflectances of colored patch surfaces,

Figure 5B exemplary power spectral densities of standard illuminants,

Figure 5C exemplary sensor channel spectral sensitives for two different sensors,

Figure 6 a schematic presentation for calculation of the sensor color channel responses,

Figure 7 scheme for establishing continuity between tiles the 2D color space,

Figures 8A, 8B comparison between the present invention and a global mapping function,

Figure 9 an apparatus for image processing according to the present invention and

Figure 10 an apparatus for capturing an image according to the present invention.

**Detailed Description**

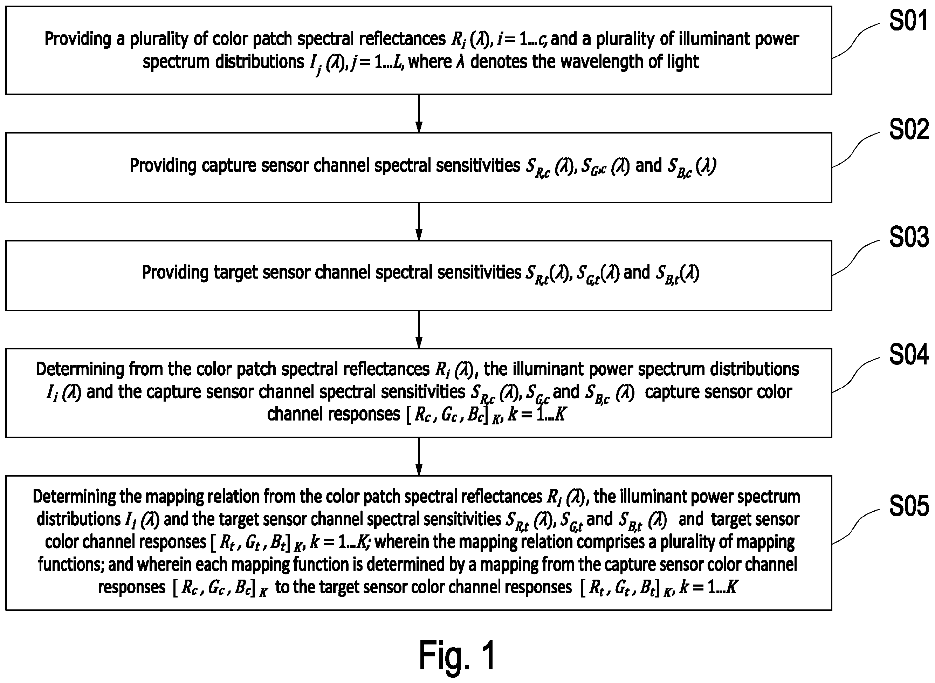

Referring to Figure 1 showing a flow diagram of a method for determining a mapping relation according to the present invention. In particular, the present invention is a computer implemented invention. The invention includes the steps of:

According to step S01, providing a plurality of color patch spectral reflectances $R_i(\lambda)$, $i = 1 \ldots C$, and a plurality of illuminant power spectrum distributions $I_j(\lambda) = 1 \ldots L$, where $\lambda$ denotes the wavelength of light.

According to step S02, providing capture sensor channel spectral sensitivities $S_{R,c}(\lambda)$, $S_{G,c}(\lambda)$ and $S_{B,c}(\lambda)$.

According to step S03, providing target sensor channel spectral sensitivities $S_{R,t}(\lambda)$, $S_{G,t}(\lambda)$ and $S_{B,t}(\lambda)$.

According to step S04, determining from the color patch spectral reflectances $R_i(\lambda)$, the illuminant power

spectrum distributions $I_j(\lambda)$ and the capture sensor channel spectral sensitivities $S_{R,c}(\lambda)$, $S_{G,c}(\lambda)$ and $S_{B,c}(\lambda)$ capture sensor color channel responses $[R_c, G_c, B_c]$, $k = 1 ...K$.

According to step S05, determining the mapping relation from the color patch spectral reflectances $R_i(\lambda)$, the illuminant power spectrum distributions $I_j(\lambda)$ and the target sensor channel spectral sensitivities $S_{R,t}(\lambda)$, $S_{G,t}(\lambda)$ and $S_{B,t}(\lambda)$ target sensor color channel responses $[R_t, G_t, B_t]_k$, $k = 1... K$.

Therein, the mapping relation comprises a plurality of mapping functions. Each mapping function is determined by a mapping from the capture sensor color channel responses $[R_c, G_c, B_c]_k$ to the target sensor color channel responses $[Rt, Gt, Bt]_k$, $k = 1... K$.

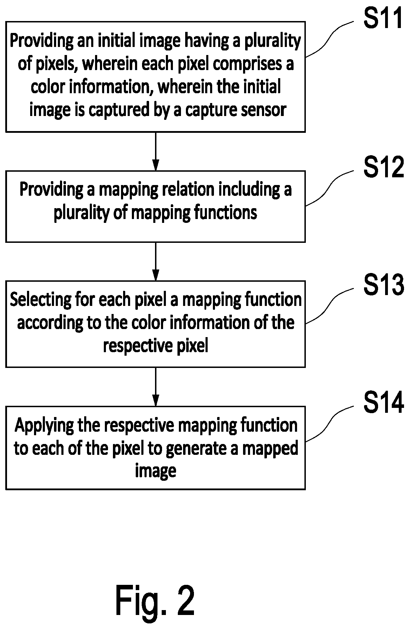

Referring to Figure 2 showing a flow diagram of a method for image processing according to the present invention. In particular, the present invention is a computer implemented invention. The invention includes the steps of: According to step S11, providing an initial image having a plurality of pixels, wherein each pixel comprises a color information, wherein the initial image is captured by a capture sensor.

According to step S12, providing a mapping relation including a plurality of mapping functions, wherein the mapping relation is determined according to the method described with reference to Figure 1 for a target sensor.

According to step S13, selecting for each pixel a mapping function according to the color information of the respective pixel.

According to step S14, applying the respective mapping function to each of the pixel to generate a mapped image.

The presented invention can find application in any product with cameras that may carry ISP technology and relies on an AI-based AWB algorithm for color cast correction. Commonly these are products where the color picture quality plays significant role for the product marketing like a smartphone, action/navigation camera, surveillance camera system, etc. White Balancing (WB) is a key color processing block in any ISP and it is usually controlled by an AWB algorithm. The AWB algorithm uses nearly raw image data / statistics to estimate the color cast shed by the illumination on the scene as a point in 3D $(R, G, B)$-space commonly referred to as a white point. The white point is used to compute a set of WB gains which are to be applied on the respective image color channels in the ISP. The AWB algorithm may be hosted as a Software (SW) or Firmware (FW) algorithm on the system's Central Processing Unit (CPU), or, in the case of an AI-based algorithm, possibly redirected to a Neural Processing Unit (NPU). The proposed color mapping solution serves as a pre-processing step for the AWB algorithm and thus needs to be applied directly on the raw image data or AWB statistics in RGB format. The system architecture is free to decide where it is most convenient to implement the color mapping pre-processing, since the proposed solution is simple enough to be carried as SW component on a CPU. In case the AWB statistics is a high-resolution data comparable to the raw image resolution, the color mapping could be implemented in the ISP side or other specialized Hardware (HW). However, even though the present invention is described in the following with respect to the AWB, other image correction steps could also make use of the present invention and their improvements.

The sensor-to-sensor invariance in the present invention is achieved by a variable mapping $\mathcal{M}\{\cdot\}$ which depends on the actual color triplet $[R_c, G_c, B_c]$. Thus, it can vary even within the limits of a single image, in contrast to the CNN-approach in Mahmoud Afifi et al. Implicitly, this means also variation depending on the illuminant. Unlike Rang Nguyen et al. and Hakki Can Karaimer et al. it does not require explicit knowledge of the illuminant, but this knowledge could stay hidden in the sensed $[R_c, G_c, B_c]$ triplet which is to be mapped. The invention requires calibration when a new input sensor is used for determining the mapping relation. The calibration procedure can be offloaded offline and does not require any production line or other special laboratory set-up, nor it is computationally intensive to require specialized computing server or cluster. The calibration procedure happens once for each new capture sensor model and it requires the knowledge of the spectral sensitivities of the sensor's color channels. In addition, it uses the spectral radiances of a number of standard light sources and the spectral reflectances of a number of color patches. The variation of the proposed mapping is not necessarily separate for each distinct $[R, G, B]$ triplet. The capture sensor color space is divided into equal regions/tiles and all color triplets belonging to the same region/tiles would use the same mapping. Calculating offline all mappings, a LUT can be used during run-time to determine the color mapping for each color triplet. Each mapping function is a light linear 3x3 matrix-vector multiplication.

When mapping colors from the capture sensor space to the target sensor space, the accuracy of the mapping is of utmost importance among the other factors. As experiments have proven, neither a global 3x3 CTM mapping form, neither other fixed mapping adapted to a preliminary known illuminant, neither a 3x3 CTM adapted to a particular image could cover all possible colors in an image to a full extent. Thus, by the present invention local mapping is implemented. By "local" here is meant that the mapping $\mathcal{M}\{\cdot\}$ will be fixed for all colors in the capture sensor space which are in the near vicinity of each other.

1. Color Space tiling

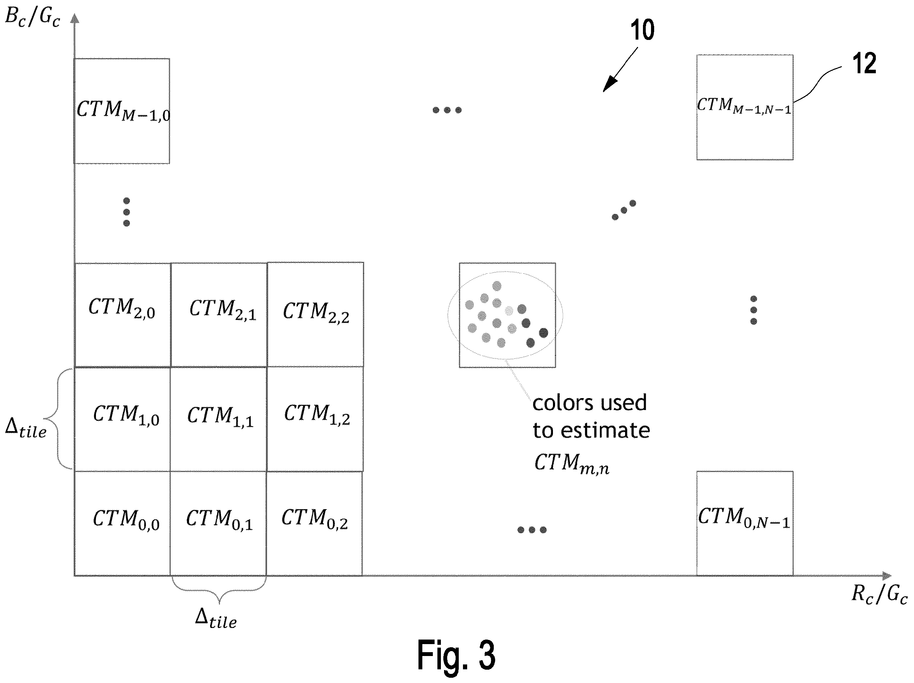

It is then the question on how to define vicinity of a color [R,G,B]. The full Three-Dimensional (3D) space defined by the R, G and B axis is probably redundant as it contains information about both the color and the lightness of a sensed object. Lightness is usually eliminated by normalization in many AWB algorithms as it carries no information about the underlying colors of a sensed scene. There are multiple different approaches on how to eliminate the lightness component and all of them reduce the 3D [R, G, B] color representation to a Two-Dimensional (2D) representation 10 as shown in Figure 3. Preferably, the red and blue channel component values are divided by the green component value:

$$[R, G, B] \longmapsto \left[\frac{R}{G}, \frac{B}{G}\right] \qquad (3)$$

This is done since the green channel of a camera sensor may have the greatest sensitivity among all channels. Note, that besides removing the insignificant lightness, the normalization in (3) helps also to reduce the work space for the mapping $\mathcal{M}\{\cdot\}$ and thus carries additional computational benefit.

In the lightness-normalized space ($R/G,B/G$), the vicinity of a color point $[R/G,B/G]$ could be defined in multiple ways. Preferably, equally spaced and non-overlapping square tiling 12 of the (R/G,B/G)-plane carries additional computational benefit during run-time application of the proposed mapping, as it will become clear later in the presentation. Now, assume that the capture sensor space ($R_c, G_c, B_c$) has been normalized to the capture sensor plane ($R_c/G_c, B_c/G_c$) via (3). As shown in Figure 3, non-overlapping equally spaced square tiling 12 can define the plane ($R_c/G_c, B_c/G_c$) and each tile 12 can be considered to contain a group of closely related colors. Therein, each tile 12 is denoted by its coordinates $m,n$.

Consequently, if the same mapping $\mathcal{M}\{\cdot\}$ is applied on all closely related colors in the tile 12, the mapped colors in the target sensor space should be quite accurate compared to the corresponding colors sensed by the target sensor. Moreover, a simple linear 3x3 CTM mapping inside each tile 12 must be sufficient.

In the sequel, the mapping relation is described in full detail for two key work flows. The first flow is the run-time application of the mapping to support a subsequent AI-based AWB. The second flow concerns the estimation of the mapping inside each tile.

2. Application of the mapping relation for image processing

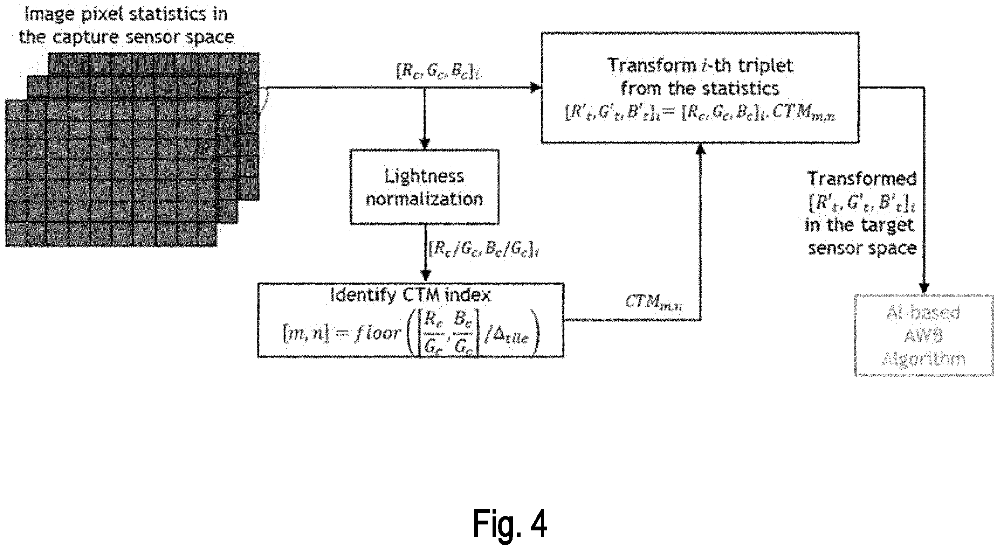

In the following it is referred to Figure 4. Usually, AWB algorithms get a low-resolution version of the raw image 14 after severe downscaling, as per the available memory and computational resources of the ISP, CPU and/or NPU. Denote each pixel color triplet in the low-resolution statistics coming from the capture sensor by $[R_c, G_c, B_c]_i$, where $i$ is an index running through all pixels in the statics. Assume that the ($R_c/G_c, B_c/G_c$)-plane has been tiled with non-overlapping square tiles forming an $M \times N$ grid of tiles as shown in Figure 3. Denote further the size of the square tiles by $\Delta_{tile}$ as illustrated in Figure 3. Assume that inside each $(m,n)$-th tile has been already determined a 3x3 matrix mapping function denoted as $CTM_{m,n}$. That means that $CTM_{m,n}$ will be used to map any color in the capture sensor space which falls within the borders of the $(m,n)$-th tile. The block diagram in Figure 4 illustrates the complete run-time processing flow of the proposed mapping method for camera sensor invariance. The detailed steps can be described as follows:

1. Each triplet $[R_c,G_c,B_c]_i$ form the capture sensor statistics is projected in a lighting normalization to a tuple $[R_c/G_c,B_c/G_c]_i$ in the ($R_c/G_c,B_c/G_c$)-plane by division with the green channel value for color lightness normalization.
2. The tuple $[R_c/G_c,B_c/G_c]_i$ is used to determine the 2D index $(m,n)$ of the tile in the ($R_c/G_c,B_c/G_c$)-plane where the color of the i-th statistics pixels belongs. This happens by the floored division:

$$[m, n] = floor\left(\left[\frac{R_c}{G_c}, \frac{B_c}{G_c}\right]/\Delta_{tile}\right) \qquad (4)$$

This can be implemented efficiently by truncation of the fractional part of the division, e.g. through integer typecasting in SW.
3. Fetch the $CTM_{m,n}$ from the LUT with all stored CTM matrices for all tiles.
4. Use the fetched $CTM_{m,n}$ to map the original unnormalized color triplet $[R_c, G_c, B_c]_i$ to a color $[R'_t, G'_t, B'_t]_i$ in the target sensor space using the equation:

$$[R'_t, G'_t, B'_t]_i = [R_c, G_c, B_c]_i \cdot CTM_{m,n} \qquad (5)$$

5. Repeat steps 1-4 to map all colors for all pixels $i$ in the capture sensor grid to the target sensor space.

The mapped color triplets $[R'_t, G'_t, B'_t]_i$ in the target sensor space might bare certain minor inaccuracy when compared to the same object, under the same illumination captured by the target sensor. However, this inaccuracy is much smaller than the inaccuracy of any globally applied method on the whole image grid.

When active in an end user-product, this run-time flow for capturing an image maps each capture sensor statistics that is to be fed to the AWB algorithm. That may happen for every single captured frame that produces a statistics grid or more seldomly, depending on the ISP settings / requirements. As the mapped image is the input of the AWB algorithm, the white point estimated by AWB lies in the mapped/target sensor space. Therefore, the white point needs to be mapped back to the capture sensor space before it is used to calculate the WB gains for correcting the captured image. Alternatively, the white balancing could be calculated and applied on the mapped image in the target sensor space. However, in this case, an inverse mapping must be applied on the white balanced image pixels to be converted back to the capture sensor space.

When used during the AWB training this run-time flow is applied for every image in the training and test data sets. If the images in the training and test sets are captured by multiple sensors, then each distinct capture sensor requires an own LUT with a set of own CTMs. However, all LUTs for all sensors must be designed to map the data to the same target sensor space.

3. Determining of a mapping relation

This section describes the details of the CTM estimation inside each tile in the $(R_c/G_c B_c/G_c)$-plane. In brief, the estimation is done by a linear LS procedure, wherein for each $CTM_{m,n}$ the procedure is applied locally inside the *(m,n)-th* tile, only using the colors that fall within the tile. The colors for the tiles have not been captured with capture and target sensors, as this will lead to a quite impractical situation requiring to recapture data for each new sensor. Instead, the colors for the multi-CTM estimation for each sensor are computed based on preliminary known spectral reflectance for a myriad of color patches, spectral radiance of standard and possibly measured light sources, and the measured spectral sensitivity of the color channels of the capture and target sensors.

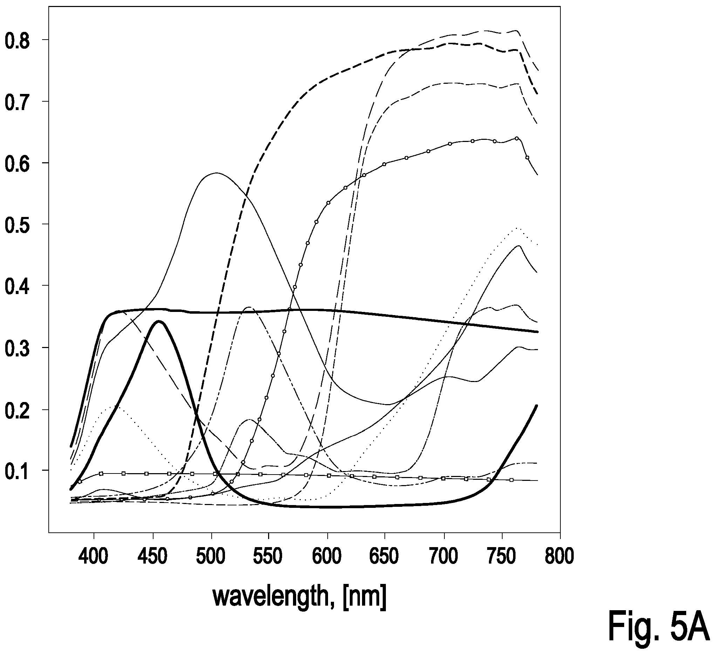

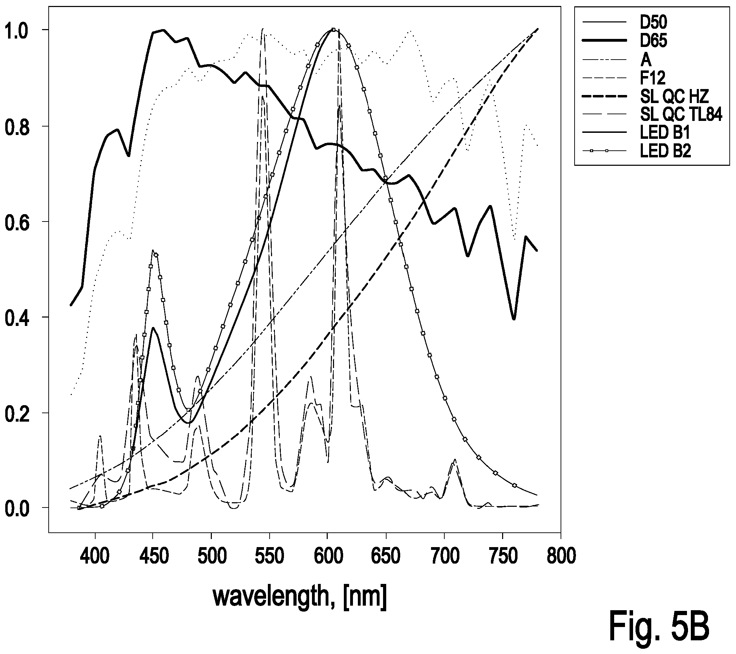

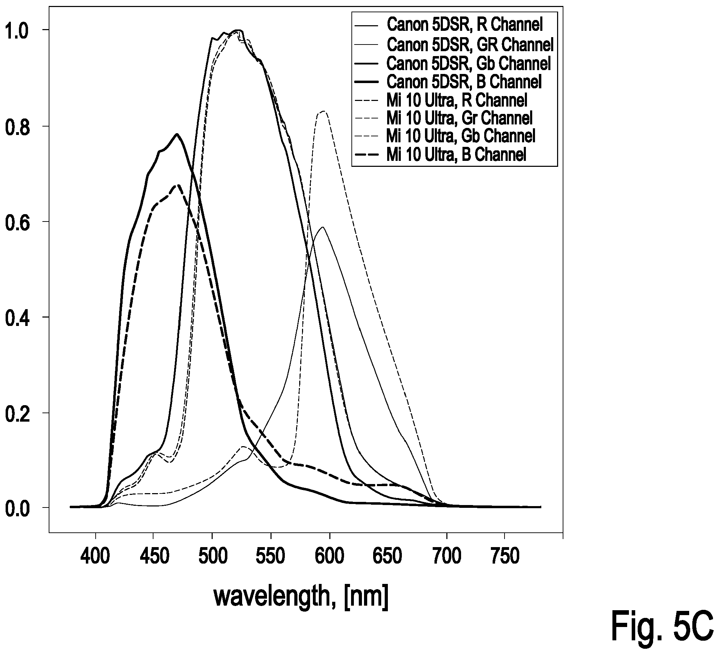

Color patch reflectance spectra can be measured directly from a myriad of available colored surfaces/patches using a spectrophotometer. There are a number of available sets of patches. Figure 5(a) illustrates the reflectance spectra of exemplified patches. Standard illuminants have been defined in theory by the power spectrum distribution of the emitted light. In addition, physical light source spectrum can be measured by illuminance spectrometer in isolated laboratory conditions. Figure 5(b) illustrates the spectrum of some standard illuminants. The camera spectral characterization is a standard procedure for each camera sensor before product integration, since this is essential for many tuning parameters related to color processing in an ISP pipeline. Figure 5(c) shows the color channel spectral sensitivity for two different cameras.

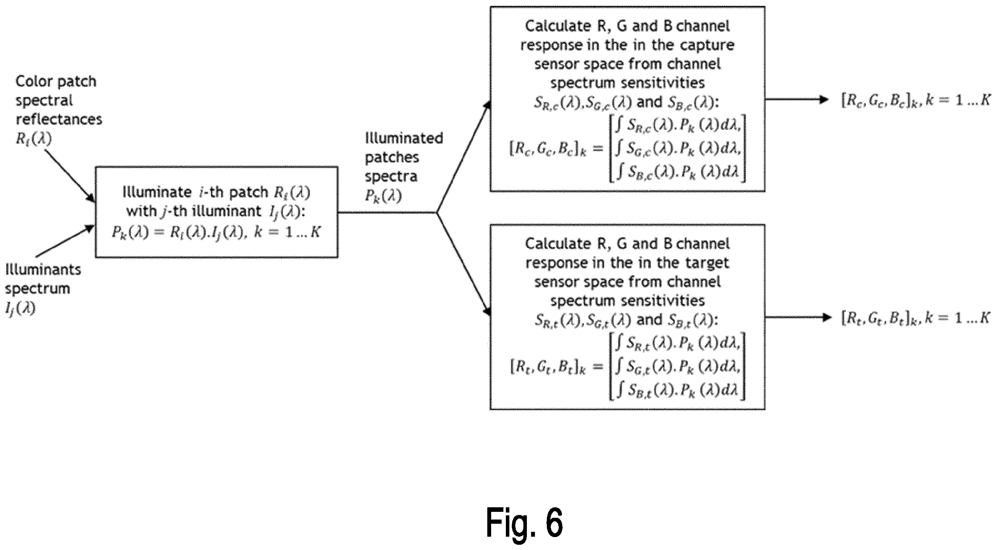

The estimation flow for all $CTM_{m,n}$, *m = 0 ...M -1,n = 0 ...N - 1* is summarized by the steps below and Figure 6 illustrates the work flow to get the color data in the capture and the target sensor spaces.

1. Collect a number of color patch spectral reflectances $R_i(\lambda)$, *i* = 1 ... *C*, and illuminant power spectrum distributions $I_j$ $(\lambda)$, *j* = 1 ...*L*, where $\lambda$ denotes the wavelength of light.

2. Illuminate the *i*-th patch $R_i((\lambda)$ with the *j*-th Illuminant $I_j(\lambda)$ to get the illuminated patch spectrum reflectance $P_k(\lambda) = R_i$ $(\lambda)$. $I_j(\lambda)$, *k* = 1 ... *K, K = C. L.*

3. Calculate the capture sensor color channel responses $[R_c, G_c, B_c]_k$ to the illuminated patches $P_k(\lambda)$ from the capture sensor channel spectral sensitivities $S_{R,c}(\lambda)$, $S_{G,c}(\lambda)$ and $S_{B,c}(\lambda)$, according to:

$$[R_c, G_c, B_c]_k = \left[\int S_{R,c}(\lambda).P_k(\lambda)d\lambda, \int S_{G,c}(\lambda).P_k(\lambda)d\lambda, \int S_{B,c}(\lambda).P_k(\lambda)d\lambda\right], k = 1 \ldots K$$

$$(6)$$

4. Calculate the target sensor color channel responses $[R_t, G_t, B_t]_k$ to the illuminated patches $P_k(\lambda)$ from the target sensor channel spectral sensitivities $S_{R,t}(\lambda)$, $S_{G,t}(\lambda)$ and $S_{B,t}(\lambda)$, according to:

$$[R_t, G_t, B_t]_k = \left[\int S_{R,t}(\lambda).P_k(\lambda)d\lambda, \int S_{G,t}(\lambda).P_k(\lambda)d\lambda, \int S_{B,t}(\lambda).P_k(\lambda)d\lambda\right], k = 1 \ldots K$$

$$(7)$$

5. Normalize the lightness of all capture sensor responses $[R_c, G_c, B_c]_k$, *k* = 1 ... *K* according to (3) in order to get their projection $[R_c/G_c, B_c/G_c]_k$, *k* = 1...*K* in the $(R_c/G_c, B_c/G_c)$-plane.

6. Find all normalized capture sensor responses $[R_c/G_c, B_c/G_c]_k$ which fall within the borders of the *(m,n)*-th tile. In other words, find all indices $k_1, k_2, k_3$, ... which satisfy:

$$\forall k: \quad \frac{R_{c,k}}{G_{c,k}} \in [m\Delta_{tile}; (m+1)\Delta_{tile}), \frac{B_{c,k}}{G_{c,k}} \in [n\Delta_{tile}; (n+1)\Delta_{tile}) \tag{8}$$

7. Stack the capture and target sensors responses $[R_c, G_c, B_c]_k$ and $[R_t, G_t, B_t]_k$ for all indices $k_1$, $k_2$, $k_3$, ... from the previous step to obtain a linear system of equations for the unknown $CTM_{m,n}$ :

$$\begin{bmatrix} [R_c, G_c, B_c]_{k_1} \\ [R_c, G_c, B_c]_{k_2} \\ \vdots \end{bmatrix} \cdot CTM_{m,n} = \begin{bmatrix} [R_t, G_t, B_t]_{k_1} \\ [R_t, G_t, B_t]_{k_2} \\ \vdots \end{bmatrix} \tag{9}$$

8. Solve the linear system in (9) by linear LS method, e.g. by taking the Moore-Penrose pseudoinverse $PINV(\cdot)$, or, any other linear LS solver:

$$CTM_{m,n} = PINV\left( \begin{bmatrix} [R_c, G_c, B_c]_{k_1} \\ [R_c, G_c, B_c]_{k_2} \\ \vdots \end{bmatrix} \right) \begin{bmatrix} [R_t, G_t, B_t]_{k_1} \\ [R_t, G_t, B_t]_{k_2} \\ \vdots \end{bmatrix} \tag{10}$$

9. Repeat steps 6 - 8 for all tiles in the range $m = 0 ... M - 1$, $n = 0... N - 1$ to cover the mappings for the whole $(R_c/G_c, B_c/G_c)$-plane.

Note that the any unknown matrix $CTM_{m,n}$ contains 9 unknown values. Therefore, in order to have a meaningful solution from (10), the linear system in (9) should not be underdetermined, i.e. it must consist of at least 9 equations. This means that $CTM_{m,n}$ can be determined from the capture and target sensor responses only when there are at least 9 capture sensor responses $[R_c/G_c, B_c/G_c]$; which fall within the borders of the $(m,n)$-th tile. Since this cannot be always guaranteed for some tiles, we propose to use the same "global" CTM for these tiles. The global CTM is found by constructing the same linear LS solution as in (9) and (10), but the indices $k_1$, $k_2$, $k_3$, ... are now coming from all tiles which encompass less than 9 capture sensor responses $[R_c/G_c, B_c/G_c]_k$.

As each tile CTM estimation requires that at least 9 capture sensor responses fall within the tile, it is essential to have rich enough data which populates densely and covers to the best extent the $(R_c/G_c, B_c/G_c)$-plane. Preferably more than 50,000 different colors to sample the $(R_c/G_c, B_c/G_c)$-plane are used and more preferably more than 100,000 different color samples are used in order to cover sufficiently the 2D color space.

The division of the input camera sensor space is an indispensable step, since global mappings seem to fail. Note that the equally-spaced tiling is not the only possible one. This proposal uses it as the numerical experiments have proven that it provides high enough accuracy of the overall sensor-to-sensor mapping. Equal spacing in the tiles is considered important for the sake of numerically efficient indexing of input colors during the run-time flow, as described in step 2 by equation (4). Other types of tiling e.g. of the 3D unnormalized space $[R_c, G_c, B_c]$ do not bring any accuracy benefit as the third dimension does not carry any color information and also brings extra dimension to be tiled leading to a huge boost in the CTM LUT size. The tiling could be done also in an overlapping manner and thus tiles poor in data would have a greater chance to estimate robustly a local CTM. Moreover, the CTM for each tile would be based also on data from the surrounding tiles and the jump from one tile to another will not happen abruptly.

The tile size $\Delta_{tile}$ is a parameter that could be optimized. Larger tiles are less likely to experience deficiency of data, but also less likely to provide accurate mapping for all colors falling in the borders of the tile. The tile size could be selected rather small for the sake of better accuracy. For example, the capture sensor color space maybe tiled by a grid of 80x80 tiles, however less than 1000 tiles have data. Thus, the LUT size must hold less than 1000 3x3 CTMs - a memory size which is suitable for placing e.g. in the cache of a mobile phone CPU.

## 4. Tile-to-tile continuity of the multi-CTM mapping

The LS-based estimation flow from section 3 estimates the CTMs independently for each tile, in the general case. This means that two adjacent tiles could end up having quite different CTMs and two colors very near the border between the tiles could be mapped quite differently if they are on the different sides of the border. This could cause practical instabilities and two nearly the same colors before the mapping could end up with a large gap after the mapping. Imagine the practical situation where an object of a single color forms a small cloud in the $(R_c/G_c, B_c/G_c)$-plane on top of the border between two tiles. The cloud is quite common and happens due to various factors like transient illumination changes, noise, shadows, etc. If the tiles on the two sides of the border have quite different CTMs, then, upon mapping to the target sensor space, some parts of the object will have quite different color than other parts. Consequently, the object could appear divided by contours or as a texture of two different colors. This might fool the early layers of the subsequent CNN-based AWB and mislead the final white point estimation.

Therefore, the continuity between the CTM mappings must be ensured for each border between two tiles so that the adjacent tile CTMs map data in a similar fashion without boosting small color differences. This can be done by introducing a regularization cost factor when calculating $CTM_{m,n}$ for each tile $(m,n)$. Consider that the border to be regularized is between tiles $(m,n\text{-}1)$ and $(m,n)$. The transition from the mapping provided by $CTM_{m,n-1}$ to the mapping by $CTM_{m,n}$ can be described by the difference matrix $D_{m,n-1\leftrightarrow m,n} = CTM_{m,n}CTM_{m,n-1}^{-1}$. When applied on vectors representing colors, like $[R_c, G_c, B_c]$, the matrix $D_{m,n\text{-}1\leftrightarrow m,n}$ must not introduce large geometric transitions like scaling, rotation and reflection. The Singular Value Decomposition (SVD) provides tools to analyze the geometric transformations caused by $D_{m,n\text{-}1\leftrightarrow m,n}$ in a straightforward manner. Denote the SVD of $D_{m,n\text{-}1\text{-}1\leftrightarrow m,n}$ by

$$D_{m,n-1\leftrightarrow m,n} = USV^T = U \begin{bmatrix} s_1 & & \\ & s_2 & \\ & & s_3 \end{bmatrix} V^T, \qquad (11)$$

where $s_1, s_2$ and $s_3$ are the singular values and $U$ and $V^T$ are orthonormal matrices representing rotation. The SVD helps to interpret the mapping done by $D_{m,n\text{-}1\text{-}1\leftrightarrow m,n}$ as composition of rotation by $U$, component-wise scaling by the singular values $s_1, s_2$ and $s_3$ and another rotation by $V^T$. Each singular value $s_i$ could be larger or smaller then 1 and since the regularization should account in both transitions from $CTM_{m,n-1}$ to $CTM_{m,n}$, or vice versa, the largest scaling for each component of the vector is $\max(s_i, 1/s_i)$. The average scalling on all 3 components of a color vector is

$$s = \sqrt[3]{\max(s_1, 1/s_1).\max(s_2, 1/s_2).\max(s_3, 1/s_3)} \qquad (12)$$

The SVD decomposes the rotation caused by $D_{m,n\text{-}1\text{-}1\leftrightarrow m,n}$ as a sequence of two rotations by $U$ and $V^T$ and hence the overall rotation is described by the matrix $UV^T$. The rotation angle $\varphi$ of the rotation can be found by the trace of $UV^T$:

$$\varphi = \left| \cos^{-1}\left( \frac{trace(UV^T)-1}{2} \right) \right| \qquad (13)$$

Any potential reflection by $D_{m,n\text{-}1\leftrightarrow m,n}$ can be evaluated by computing its determinant:

$$reflection = det\left(D_{m,n-1\leftrightarrow m,n}\right). \qquad (14)$$

Finally, a regularization cost term for the transitional jumps between tiles $(m, n\text{ - }1)$ and $(m,n)$ can be formed by adding the factors from (12), (13) and (14):

$$REG_{m,n-1\leftrightarrow m,n} = s + \varphi + det\left(D_{m,n-1\leftrightarrow m,n}\right). \qquad (15)$$

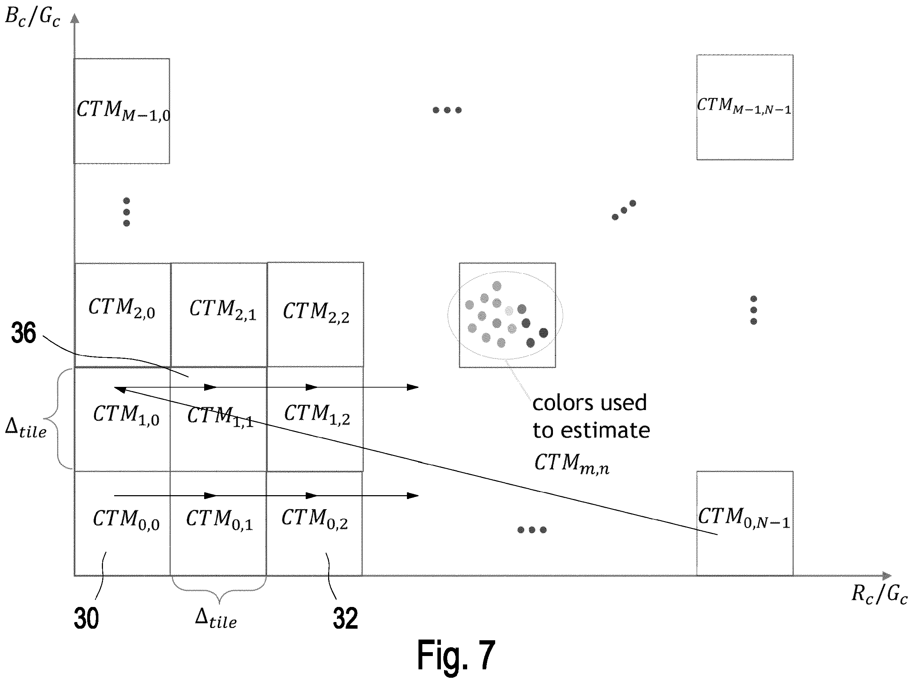

The regularized version of the multi-CTM estimation algorithm in section 3 can be constructed by modifying the LS solution in step 8. In general, each tile $(m,n)$ has four borders which need to be regularized - the borders with tiles $(m, n\text{ - }1)$, $(m\text{ - }1,n)$, $(m, n\text{ + }1)$ and $(m\text{ + }1,n)$. However, when solving (9) for $CTM_{m,n}$, the regularization terms only for the borders with tiles $(m, n\text{ - }1)$ and $(m\text{ - }1,n)$ can be relaxed. This will ensure smooth CTM transitions between tiles $(m,n)$ and $(m\text{ - }1, n)$ and between tiles $(m,n)$ and $(m, n\text{ - }1)$. The transitions of the other two borders - between tiles $(m,n)$ and $(m\text{ + }1, n)$ and between tiles $(m, n)$ and $(m, n\text{ + }1)$ can be done when solving (9) for tiles $(m\text{ + }1, n)$ and $(m, n\text{ + }1)$, respectively. This can be ensured as long as the tiles are handled sequentially as indicated in Figure 7 in a raster scan 32 starting from tile (0,0) (tile 30 in Figure 7) and proceeding row by row towards tile $(M\text{ - }1, N\text{ - }1)$ (tile 36 in Figure 7). With this in mind, the regularized version of step 8 in the multi-CTM mapping estimation flow can be formulated as to find $CTM_{m,n}$ by minimizing the total cost:

$$C_{m,n} = \left\| \begin{bmatrix} [R_t, G_t, B_t]_{k_1} \\ [R_t, G_t, B_t]_{k_2} \\ \vdots \end{bmatrix} - \begin{bmatrix} [R_c, G_c, B_c]_{k_1} \\ [R_c, G_c, B_c]_{k_2} \\ \vdots \end{bmatrix} \cdot CTM_{m,n} \right\| + REG_{m,n-1 \leftrightarrow m,n} + REG_{m-1,n \leftrightarrow m,n} \quad (16)$$

The cost in (16) can be optimized by e.g. the Nelder-Mead simplex algorithm for unconstrained optimization. Also, any other optimization algorithm could be used as long as it does not require explicit computation of the derivative of the cost function.

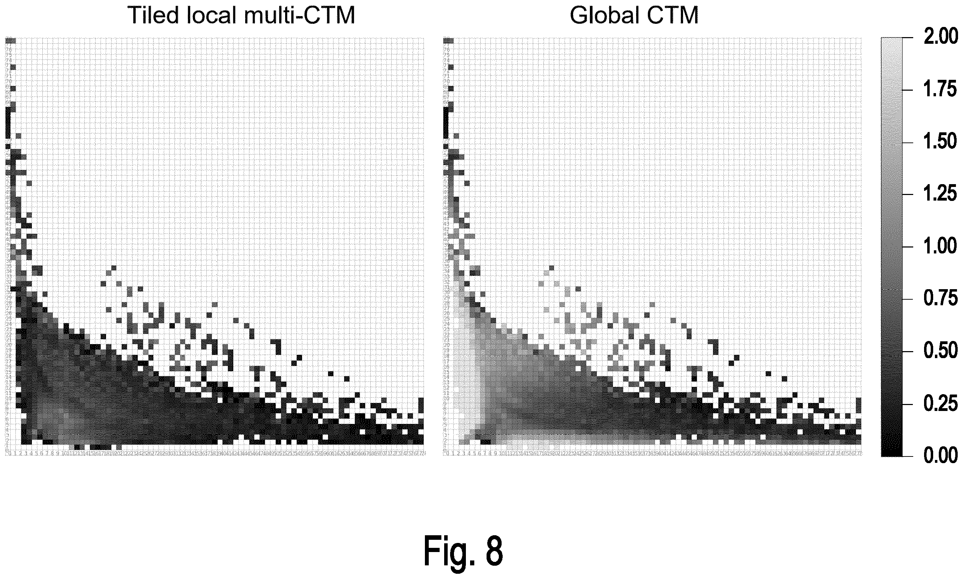

The accuracy benefit of the proposed solution can be proven with a numerical experiment shown in Figure 8A, 8B. The experiment compares the sensor-to-sensor mapping according to the present invention in Figure 8A and an approach using a single global 3x3 CTM in Figure 8B. Both tested sensor-to-sensor mapping approaches map data from a DSLR sensor of Canon 5DSR to the main sensor of the Mi 10 Ultra mobile device and compare the accuracy of the mapping. In the adopted terms of this presentation, the capture sensor is that of Canon 5DSR and the target senor is that of Mi 10 Ultra. The capture sensor $(R_c/G_c, B_c/G_c)$-plane has been tiled and a CTM has been locally estimated inside each plane to demonstrate the accuracy of the proposed approach. The single global CTM of Figure 8B has been estimated from the same data as for the present invention. Indeed, the local multi-CTM method according to the present invention proves to be more accurate especially around the borders of the color gamut, as illustrated in Figure 8A. The average angular error in each $(m,n)$-th tile of the $(R_c/G_c, B_c/G_c)$-plane is evaluated between the target colors $[R_t, G_t, B_t]_k$ for the $(m,n)$-th tile and the mapped capture colors $[R'_t, G'_t, B'_t]_k = [R_c, G_c, B_c]_k \cdot CTM_{m,n}$. In Figure 8A each the $(m,n)$-th tile uses its own estimated $CTM_{m,n}$, while a global CTM has been used to produce the Figure 8B. Empty tiles have no data in the given dataset and are unlikely met in practice. However, they can be handled with a single global CTM when needed. The range of displayed angular errors has been clipped to the range $[0°, 2°]$ since angular error of less than $2°$ is counted as visually unnoticeable. Note that the present invention shows in most tiles average angular error way below $1°$ with the maximum being around $1.75°$, while the single CTM approach has plenty of tiles with average error above $2°$. This proves that the current method is accurate especially near the axes of the $(R_c/G_c, B_c/G_c)$-plane and this can be shown only with rich enough data.

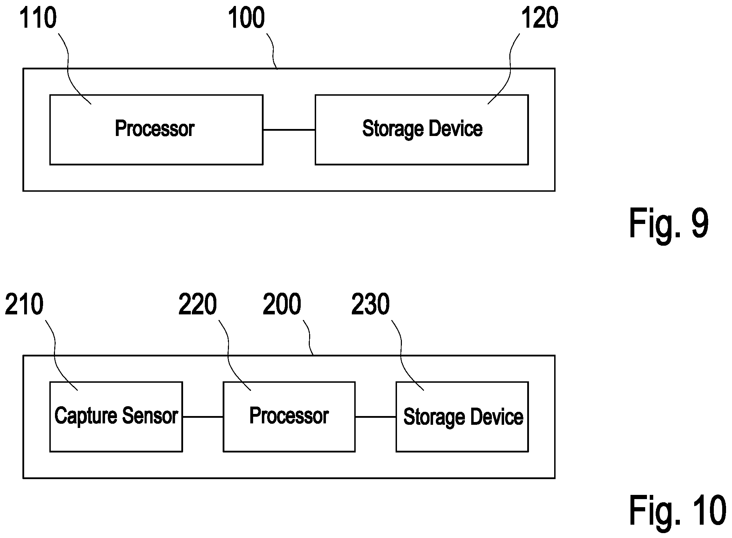

Referring to Fig. 9, which shows a simplified block diagram of an example embodiment of an apparatus 100 for image processing. The apparatus 100 includes a processor 110 and a memory storage device 120 connected to the processor 110. The memory storage device 120 may store a computer program or application containing instructions that, when executed, cause the processor 110 to perform operations such as those described herein. For example, the instructions may perform methods in accordance with the methods described herein. It will be understood that the instructions may be stored on a non-transitory computer-readable medium, such as a compact disc, flash memory device, random access memory, hard drive, etc. When the instructions are executed, the processor 110 carries out the operations and functions specified in the instructions so as to operate as a special-purpose processor that implements the described process(es). Such a processor may be referred to as a "processor circuit" or "processor circuitry" in some examples.

Referring to Fig. 10, which shows a simplified block diagram of an example embodiment of an apparatus 200 for image capturing. The apparatus 200 includes a processor 220 and a memory storage device 230 connected to the processor 220. Further, a capture sensor 210 is connected to the processor 220 to capture images. The memory storage device 230 may store a computer program or application containing instructions that, when executed, cause the processor 220 to perform operations such as those described herein. For example, the instructions may perform methods in accordance with the methods described herein. It will be understood that the instructions may be stored on a non-transitory computer-readable medium, such as a compact disc, flash memory device, random access memory, hard drive, etc. When the instructions are executed, the processor 220 carries out the operations and functions specified in the instructions so as to operate as a special-purpose processor that implements the described process(es). Such a processor may be referred to as a "processor circuit" or "processor circuitry" in some examples.

The present application also provides a non-transitory computer-readable storage medium storing processor-executed instructions that, when executed by a processor, cause the processor to perform the method in accordance with the methods described herein.

Certain adaptations and modifications of the described embodiments can be made. Therefore, the above discussed embodiments are considered to be illustrative and not restrictive. In particular, embodiments can be freely combined with each other.

## Claims

1. Method to determine a mapping relation for image processing comprising:

    Providing a plurality of color patch spectral reflectances $R_i(\lambda)$, $i = 1 \ldots C$, and a plurality of illuminant power spectrum distributions $I_j(\lambda), j = 1 \ldots L$, where $\lambda$ denotes the wavelength of light, $C$ denotes the number of patches, and $L$ denotes the number of illuminants;

Providing capture sensor channel spectral sensitivities $S_{R,c}(\lambda)$, $S_{G,c}(\lambda)$ and $S_{B,c}(\lambda)$;

Providing target sensor channel spectral sensitivities $S_{R,t}(\lambda)$, $S_{G,t}(\lambda)$ and $S_{B,t}(\lambda)$;

Determining from the color patch spectral reflectances $R_i(\lambda)$, the illuminant power spectrum distributions $I_j(\lambda)$ and the capture sensor channel spectral sensitivities $S_{R,c}(\lambda)$, $S_{G,c}(\lambda)$ and $S_{B,c}(\lambda)$ capture sensor color channel responses $[R_c, G_c, B_c]_k$, $k=1...K$, where $K=C·L$; and

Determining a mapping relation from the color patch spectral reflectances $R_i(\lambda)$,

the illuminant power spectrum distributions $I_j(\lambda)$ and the target sensor channel spectral sensitivities $S_{R,t}(\lambda)$, $S_{G,t}(\lambda)$ and $S_{B,t}(\lambda)$ target sensor color channel responses $[R_t, G_t, B_t]_k$, $k = 1 ... K$;

wherein the mapping relation comprises a plurality of mapping functions; and

wherein each mapping function is determined by a mapping from the capture sensor color channel responses $[R_c, G_c, B_c]_k$ to the target sensor color channel responses $[R_t, G_t, B_t]_k$, $k = 1 ... K$

wherein a 2D color space is defined for the sensor color responses by eliminating a lightness component from an RGB color space and the 2D color space is divided into preferably equal tiles, wherein each capture sensor color channel response $[R_c, G_c, B_c]_k$ and each target sensor color channel response $[R_t,G_t,B_t]$, are assigned to one tile, and wherein for each tile one mapping function is determined.

2. Method according to claim 1, wherein for one or more of the capture color channel responses $[R_c, G_c, B_c]_k$ and/or one or more of the target color channel responses $[R_t, G_t, B_t]_k$ having a similar color information a common mapping function is determined, wherein similar color information refers to color information having a difference smaller than a pre-determined threshold $\Delta_{tile}$.

3. Method according to claim 1, wherein the 2D color space is defined by eliminating the lightness from the RGB-color space, in particular by $[R/G, B/G]$.

4. Method according to any of claims 1 to 3, wherein the capture sensor color channel response $[R_c, G_c, B_c]_k$ is calculated by $[R_c, G_c, B_c]_k = [\int S_{R,c}(\lambda).P_k(\lambda)d\lambda, \int S_{G,c}(\lambda).P_k(\lambda)d\lambda, \int S_{R,c}(\lambda).P_k(\lambda)d\lambda], k = 1 ...K$ and

wherein the target sensor color channel response $[R_t, G_t, B_t]_k$ is calculated by $[R_t, G_t, B_t]_k = [\int S_{R,t}(\lambda). P_k(\lambda)d\lambda, \int S_{G,t}(\lambda). P_k(\lambda)d\lambda, \int S_{B,t}(\lambda). P_k(\lambda)d\lambda]$, $k = 1 ... K$, with $P_k(\lambda) = R_i(\lambda). I_j(\lambda)$, $i = 1,...,C$, $j = 1,...,L$, $k = 1...K, K = C · L$.

5. Method according to any of claims 1 to 4, wherein a linear system of equations is obtained for the mapping function $CTM_{m,n}$:

$$\begin{bmatrix} [R_c, G_c, B_c]_{k_1} \\ [R_c, G_c, B_c]_{k_2} \\ \vdots \end{bmatrix} . CTM_{m,n} = \begin{bmatrix} [R_t, G_t, B_t]_{k_1} \\ [R_t, G_t, B_t]_{k_2} \\ \vdots \end{bmatrix}$$

with $k = k_1, k_2, ...$ indicating the capture sensor color channel responses $[R_c, G_c, B_c]_k$ and target sensor color channel responses $[R_t, G_t, B_t]_k$ assigned to the same mapping function, wherein the linear system of equations is solved to obtain the mapping function $CTM_{m,n}$.

6. Method according to any of claims 1 to 5, wherein when there are less than nine capture sensor color channel responses $[R_c, G_c, B_c]_k$ and target sensor color channel responses $[R_t, G_t, B_t]_k$ assigned to the same mapping function $CTM_{m,n}$, the mapping function is replaced by a global mapping function $CTM_{Global}$.

7. Method according to any of claims 1 to 6, wherein mapping functions corresponding to neighboring capture sensor color channel responses $[R_c, G_c, B_c]_k$ and target sensor color channel responses $[R_t, G_t, B_t]_k$, and in particular neighboring tiles are made continuous.

8. Method according to claim 7, wherein continuity between two neighboring mapping functions is provided by minimizing one or more of scaling, rotating and reflecting of one or both of the mapping functions.

9. Method according to claims 7 or 8, wherein continuity is provided between one mapping function and all neighboring mapping functions.

**10.** Method according to any of claims 1 to 9, wherein the mapping relation and in particular the mapping functions $CTM_{m,n}$ are stored preferably in a Look-Up Table, LUT.

**11.** Method for image processing comprising:

Providing an initial image having a plurality of pixels, wherein each pixel comprises a color information, wherein the initial image is captured by a capture sensor;
Providing a mapping relation including a plurality of mapping functions, wherein the mapping relation is determined according to any of claims 1 to 10 for a target sensor;
Selecting for each pixel a mapping function according to the color information of the respective pixel; and
Applying the respective mapping function to each of the pixel to generate a mapped image.

**12.** Method for training an image processing module of a camera having a target sensor, comprising:

Providing a plurality of training images captured with a capture sensor,
Process the plurality of training images according to the method for image processing according to claim 11 to acquire final training images,
Training of the image processing module with the final training images.

**13.** Method for capturing an image comprising,

Capturing an image by a capture sensor,
Process the captured image according to the method for image processing according to claim 11 to acquire a corrected image, wherein the target sensor is the sensor for that an image processing module has been trained,
Apply an image processing to the corrected image by the trained image processing module,
Apply an inverse of the mapping relation to generate a processed image or apply an inverse of the mapping relation to an Automatic White Balancing, AWB, result, which is used to calculate the white balancing gains for correcting the captured image.

**14.** Apparatus comprising a processor and a memory, wherein the memory stores instructions when carried out by the processor perform the steps of the method according to any of claims 1 to 13.

**Patentansprüche**

**1.** Verfahren zum Bestimmen einer Mapping-Beziehung für Bildverarbeitung, das umfasst:

Bereitstellen einer Vielzahl von Farbfeld-Spektralreflexionen $R_i(\lambda)$, $i = 1 ... C$ und einer Vielzahl von Leutmittel-Leistungsspektrumverteilungen $I_j(\lambda)$, $j = 1 ... L$, wobei $\lambda$ die Wellenlänge von Licht bezeichnet, $C$ die Anzahl von Feldern bezeichnet, und $L$ die Anzahl von Leuchtmitteln bezeichnet;
Bereitstellen von Erfassungssensor-Kanal-Spektralempfindlichkeiten $S_{R,c}(\lambda)$, $S_{G,c}(\lambda)$ und $S_{B,c}(\lambda)$;
Bereitstellen von Zielsensor-Kanal-Spektralempfindlichkeiten $S_{R,t}(\lambda)$, $S_{G,t}(\lambda)$ und $S_{B,t}(\lambda)$;
Bestimmen aus den Farbfeld-Spektralreflexionen $R_i(\lambda)$, den Leutmittel-Leistungsspektrumverteilungen $I_j(\lambda)$, und den Erfassungssensor-Kanal-Spektralempfindlichkeiten $S_{R,c}(\lambda)$, $S_{G,c}(\lambda)$ und $S_{B,c}(\lambda)$ von Erfassungssensor-Farbkanal-Antworten $[R_c, G_c, B_c]_k$, $k = 1 ... K$, wobei $K = C \cdot L$; und
Bestimmen einer Mapping-Beziehung aus den Farbfeld-Spektralreflexionen $R_i(\lambda)$, den Leutmittel-Leistungsspektrumverteilungen $I_j(\lambda)$, den Erfassungssensor-Kanal-Spektralempfindlichkeiten $S_{R,c}(\lambda)$, $S_{G,c}(\lambda)$ und $S_{B,c}(\lambda)$, und den Erfassungssensor-Farbkanal-Antworten $[R_c, G_c, B_c]_k$, $k = 1 ... K$;
wobei die Mapping-Beziehung eine Vielzahl von Mapping-Funktionen umfasst; und
wobei jede Mapping-Funktion durch ein Mapping von den Erfassungssensor-Farbkanal-Antworten $[R_c, G_c, B_c]_k$ zu den Zielsensor-Farbkanal-Antworten $[R_t, G_t, B_t]_k$, $k = 1 ... K$ bestimmt wird,
wobei ein 2D-Farbraum für die Sensorfarbantworten definiert wird, indem eine Helligkeitskomponente aus einem RGB-Farbraum ausgeschlossen wird und der 2D-Farbraum in vorzugsweise gleiche Kacheln geteilt wird, wobei jede Erfassungssensor-Farbkanal-Antwort $[R_c, G_c, B_c]_k$ und jede Zielsensor-Farbkanal-Antwort $[R_t, G_t, B_t]_k$, $k = 1 ... K$ einer Kachel zugeordnet werden, und wobei für jede Kachel eine Mapping-Funktion bestimmt wird.

**2.** Verfahren nach Anspruch 1, wobei für eine oder mehrere der Erfassungssensor-Farbkanal-Antworten $[R_c, G_c, B_c]_k$ und/oder eine oder mehrere der Zielfarbkanal-Antworten $[R_t, G_t, B_t]_k$ mit einer ähnlichen Farbinformation eine gemeinsame Mapping-Funktion bestimmt wird, wobei sich ähnliche Farbinformationen auf Farbinformationen mit einer Differenz beziehen, die kleiner ist als ein vorbestimmter Schwellenwert $\Delta_{tile}$.

3.  Verfahren nach Anspruch 1, wobei der 2D-Farbraum definiert wird, indem die Helligkeit aus dem RGB-Farbraum ausgeschlossen wird, insbesondere durch [$R/G,B/G$].

4.  Verfahren nach einem der Ansprüche 1 bis 3, wobei die Erfassungssensor-Farbkanal-Antwort $[R_c,G_c,B_c]_k$ berechnet wird durch $[R_c,G_c,B_c]_k = [\int S_{R,c}(\lambda).P_k(\lambda)d\lambda, \int S_{G,c}(\lambda).P_k(\lambda)d\lambda, \int S_{R,c}(\lambda).P_k(\lambda)d\lambda], k = 1 \ldots K$, und wobei die Zielsensor-Farbkanal-Antwort $[R_t,G_t,B_t]_k$ berechnet wird durch $[R_t,G_t,B_t]_k = [\int S_{R,t}(\lambda). P_k(\lambda)d\lambda, \int S_{G,t}(\lambda). P_k(\lambda)d\lambda, \int S_{B,t}(\lambda). P_k(\lambda) d\lambda], k = 1 \ldots K$, wobei $P_k(\lambda) = R_i(\lambda).I_j(\lambda), i = 1,\ldots,C, j = 1,\ldots,L, k = 1 \ldots K, K = C \cdot L$.

5.  Verfahren nach einem der Ansprüche 1 bis 4, wobei ein Linearsystem aus Gleichungen für die Mapping-Funktion $CTM_{m,n}$ erhalten wird:

$$
\begin{bmatrix} [R_c, G_c, B_c]_{k_1} \\ [R_c, G_c, B_c]_{k_2} \\ \vdots \end{bmatrix} . CTM_{m,n} = \begin{bmatrix} [R_t, G_t, B_t]_{k_1} \\ [R_t, G_t, B_t]_{k_2} \\ \vdots \end{bmatrix}
$$

wobei $k = k_1, k_2, \ldots$ die Erfassungssensor-Farbkanal-Antworten $[R_c,G_c,B_c]_k$ und die Zielsensor-Farbkanal-Antworten $[R_t,G_t,B_t]_k$ angibt, die der gleichen Mapping-Funktion zugeordnet sind, wobei das Linearsystem aus Gleichungen gelöst wird, um die Mapping-Funktion $CTM_{m,n}$ zu erhalten.

6.  Verfahren nach einem der Ansprüche 1 bis 5, wobei, wenn weniger als neun Erfassungssensor-Farbkanal-Antworten $[R_c,G_c,B_c]_k$ und Zielsensor-Farbkanal-Antworten $[R_t,G_t,B_t]_k$ vorliegen, die der gleichen Mapping-Funktion $CTM_{m,n}$ zugeordnet sind, die Mapping-Funktion durch eine globale Mapping-Funktion $CTM_{Global}$ ersetzt wird.

7.  Verfahren nach einem der Ansprüche 1 bis 6, wobei Mapping-Funktionen, die benachbarten Erfassungssensor-Farbkanal-Antworten $[R_c,G_c,B_c]_k$ und Zielsensor-Farbkanal-Antworten $[R_t,G_t,B_t]$, entsprechen, und insbesondere benachbarte Kacheln, kontinuierlich gemacht werden.

8.  Verfahren nach Anspruch 7, wobei die Kontinuität zwischen zwei benachbarten Mapping-Funktionen bereitgestellt wird, indem eines aus Skalierung, Drehung und Reflexion einer oder beider Mapping-Funktionen minimiert wird.

9.  Verfahren nach Anspruch 7 oder 8, wobei die Kontinuität zwischen einer Mapping-Funktion und allen benachbarten Mapping-Funktionen bereitgestellt wird.

10. Verfahren nach einem der Ansprüche 1 bis 9, wobei die Mapping-Beziehung und insbesondere die Mapping-Funktionen $CTM_{m,n}$ vorzugsweise in einer Look-up-Tabelle, LUT, gespeichert werden.

11. Verfahren zur Bildverarbeitung, das umfasst:

    Bereitstellen eines Ausgangsbildes mit einer Vielzahl von Pixeln, wobei jedes Pixel eine Farbinformation umfasst, wobei das Ausgangsbild von einem Erfassungssensor erfasst wird;
    Bereitstellen einer Mapping-Beziehung, die eine Vielzahl von Mapping-Funktionen umfasst, wobei die Mapping-Beziehung nach einem der Ansprüche 1 bis 10 für einen Zielsensor bestimmt wird;
    Auswählen einer Mapping-Funktion für jedes Pixel entsprechend den Farbinformationen des entsprechenden Pixels; und
    Anwenden der jeweiligen Mapping-Funktion auf jeden der Pixel, um ein gemapptes Bild zu erzeugen.

12. Verfahren zum Trainieren eines Bildverarbeitungsmoduls einer Kamera mit einer Zielsensor, das umfasst:

    Bereitstellen einer Vielzahl von Trainingsbildern, die mit einem Erfassungssensor erfasst werden,
    Verarbeiten der Vielzahl von Trainingsbildern entsprechend dem Verfahren zur Bildverarbeitung nach Anspruch 11, um finale Trainingsbilder zu erhalten.

13. Verfahren zum Erfassen eines Bildes, das umfasst:

Erfassen eines Bildes mittels eines Erfassungssensors,

Verarbeiten des erfassten Bildes gemäß dem Verfahren zur Bildverarbeitung nach Anspruch 11, um ein korrigiertes Bild zu erhalten, wobei der Zielsensor der Sensor ist, für den ein Bildverarbeitungsmodul trainiert wurde,

Anwenden einer Bildverarbeitung auf das korrigierte Bild mittels des trainierten Bildverarbeitungsmoduls,

Anwenden einer Umkehrung der Mapping-Beziehung, um ein verarbeitetes Bild zu erzeugen, oder Anwenden einer Umkehrung der Mapping-Beziehung auf ein Ergebnis des automatischen Weißabgleichs, AWB, das verwendet wird, um die Weißabgleichverstärkungen zum Korrigieren der erfassten Bildes zu berechnen.

14. Vorrichtung, die einen Prozessor und einen Speicher aufweist, wobei der Speicher Anweisungen speichert, die bei Ausführung durch den Prozessor die Schritte des Verfahrens nach einem der Ansprüche 1 bis 13 durchführen.

**Revendications**

1. Procédé pour déterminer une relation de mappage de traitement d'image, comprenant les étapes consistant à :

obtenir une pluralité de réflectances spectrales de touches de couleur $R_i (\lambda)$, $i$ = 1...$C$, et une pluralité de distributions de spectres de puissance de source lumineuse $I_j(\lambda)$, $j$ = 1...$L$, où $\lambda$ désigne la longueur d'onde de lumière, $C$ désigne le nombre de touches, et $L$ désigne le nombre de sources lumineuses ;

obtenir des sensibilités spectrales de canal de capteur de capture $S_{R,c} (\lambda)$, $S_{G,c} (\lambda)$ et $S_{B,c} (\lambda)$ ;

obtenir des sensibilités spectrales de canal de capteur cible $S_{R,t}(\lambda)$, $S_{G,t}(\lambda)$ et $S_{B,t} (\lambda)$ ;

déterminer, à partir des réflectances spectrales de touches de couleur $R_i (\lambda)$, des distributions de spectres de puissance de source lumineuse $I_j(\lambda)$ et des sensibilités spectrales de canal de capteur de capture $S_{R,c}(\lambda)$, $S_{G,c}(\lambda)$ et $S_{B,c}(\lambda)$, des réponses de canal de couleur de capteur de capture $[R_c, G_c, B_c]_k$, $k$ = 1...$K$, où $K$ = $C \cdot L$ ; et

déterminer une relation de mappage, à partir des réflectances spectrales de touches de couleur $R_i (\lambda)$, des distributions de spectres de puissance de source lumineuse $I_j(\lambda)$ et des sensibilités spectrales de canal de capteur cible $S_{R,t}(\lambda)$, $S_{G,t}(\lambda)$ et $S_{B,t}(\lambda)$, des réponses de canal de couleur de capteur cible $[R_t, G_t, B_t]_k$, $k$ = 1...$K$ ;

dans lequel la relation de mappage comprend une pluralité de fonctions de mappage ; et

dans lequel chaque fonction de mappage est déterminée par un mappage des réponses de canal de couleur de capteur de capture $[R_c, G_c, B_c]_k$ aux réponses de canal de couleur de capteur cible $[R_t, G_t, B_t]_k$, $k$ = 1...$K$

dans lequel un espace chromatique 2D est défini pour les réponses de couleur de capteur par une élimination d'une composante de clarté d'un espace chromatique RGB et l'espace chromatique 2D est divisé en tuiles de préférence égales, dans lequel chaque réponse de canal de couleur de capteur de capture $[R_c, G_c, B_c]_k$ et chaque réponse de canal de couleur de capteur cible $[R_t, G_t, B_t]_k$ sont attribuées à une tuile, et dans lequel une fonction de mappage est déterminée pour chaque tuile.

2. Procédé selon la revendication 1, dans lequel, pour une ou plusieurs des réponses de canal de couleur de capture $[R_c, G_c, B_c]_k$ et/ou pour une ou plusieurs des réponses de canal de couleur cible $[R_t, G_t, B_t]_k$ ayant des informations de couleur similaire, une fonction de mappage commune est déterminée, dans lequel des informations de couleur similaire se réfèrent à des informations de couleur ayant une différence inférieure à un seuil prédéterminé $\Delta_{tile}$.

3. Procédé selon la revendication 1, dans lequel l'espace chromatique 2D est défini par une élimination de la clarté de l'espace chromatique RGB, en particulier par $[R/G, B/G]$ .

4. Procédé selon l'une quelconque des revendications 1 à 3, dans lequel la réponse de canal de couleur de capteur de capture $[R_c, G_c, B_c]_k$ est calculée par $[R_c, G_c, B_c]_k = [\int S_{R,c} (\lambda) \cdot P_k(\lambda) \, d\lambda, \int S_{G,c} (\lambda) \cdot P_k(\lambda) \, d\lambda, \int S_{B,c} (\lambda) \cdot P_k(\lambda) \, d\lambda]$, $k$ = 1...$K$ et

dans lequel la réponse de canal de couleur de capteur cible $[R_t, G_t, B_t]_k$ est calculée par $[R_t, G_t, B_t]_k = [\int S_{R,t} (\lambda) \cdot P_k(\lambda) \, d\lambda, \int S_{G,t} (\lambda) \cdot P_k(\lambda) \, d\lambda, \int S_{B,t} (\lambda) \cdot P_k(\lambda) \, d\lambda]$, $k$ = 1...$K$, avec $P_k(\lambda) = R_i (\lambda) \cdot I_j (\lambda)$, $i$ = 1,...,$C$, $j$ = 1,...,$L$, $k$ = 1...$K$, $K$ = $C \cdot L$.

5. Procédé selon l'une quelconque des revendications 1 à 4, dans lequel un système linéaire d'équations est obtenu pour la fonction de mappage $CTM_{m,n}$ :

$$\begin{bmatrix} [R_c, G_c, B_c]_{k_1} \\ [R_c, G_c, B_c]_{k_2} \\ \vdots \end{bmatrix} \cdot CTM_{m,n} = \begin{bmatrix} [R_t, G_t, B_t]_{k_1} \\ [R_t, G_t, B_t]_{k_2} \\ \vdots \end{bmatrix}$$

avec $k = k_1, k_2, \ldots$ indiquant les réponses de canal de couleur de capteur de capture $[R_c, G_c, B_c]_k$ et les réponses de canal de couleur de capteur cible $[R_t, G_t, B_t]_k$ attribuées à la même fonction de mappage, dans lequel le système linéaire d'équations est résolu pour obtenir la fonction de mappage $CTM_{m,n}$.

6. Procédé selon l'une quelconque des revendications 1 à 5, dans lequel, lorsqu'il y a moins de neuf réponses de canal de couleur de capteur de capture $[R_c, G_c, B_c]_k$ et de réponses de canal de couleur de capteur cible $[R_t, G_t, B_t]_k$ attribuées à la même fonction de mappage $CTM_{m,n}$, la fonction de mappage est remplacée par une fonction de mappage globale $CTM_{Global}$.

7. Procédé selon l'une quelconque des revendications 1 à 6, dans lequel des fonctions de mappage correspondant à des réponses de canal de couleur de capteur de capture $[R_c, G_c, B_c]_k$ et à des réponses de canal de couleur de capteur cible $[R_t, G_t, B_t]_k$ voisines, et en particulier à des tuiles voisines, sont établies en continu.

8. Procédé selon la revendication 7, dans lequel une continuité entre deux fonctions de mappage voisines est obtenue par une réduction au minimum d'une ou de plusieurs d'une mise à l'échelle, d'une rotation et d'une réflexion d'une ou des deux fonctions de mappage.

9. Procédé selon les revendications 7 ou 8, dans lequel une continuité est obtenue entre une fonction de mappage et toutes les fonctions de mappage voisines.

10. Procédé selon l'une quelconque des revendications 1 à 9, dans lequel la relation de mappage et en particulier les fonctions de mappage $CTM_{m,n}$ sont mémorisées de préférence dans une table de consultation, dite LUT.

11. Procédé de traitement d'image, comprenant les étapes consistant à :

   obtenir une image initiale comportant une pluralité de pixels, dans lequel chaque pixel comprend des informations de couleur, dans lequel l'image initiale est capturée par un capteur de capture ;
   obtenir une relation de mappage comprenant une pluralité de fonctions de mappage, dans lequel la relation de mappage est déterminée selon l'une quelconque des revendications 1 à 10 pour un capteur cible ;
   sélectionner, pour chaque pixel, une fonction de mappage conformément aux informations de couleur du pixel respectif ; et
   appliquer la fonction de mappage respective à chaque pixel pour générer une image mappée.

12. Procédé d'entraînement d'un module de traitement d'image d'une caméra comportant un capteur cible, comprenant les étapes consistant à :

   obtenir une pluralité d'images d'entraînement capturées au moyen d'un capteur de capture,
   traiter les images de la pluralité d'images d'entraînement conformément au procédé de traitement d'image selon la revendication 11 pour acquérir des images d'entraînement finales,
   entraîner le module de traitement d'image avec les images d'entraînement finales.

13. Procédé de capture d'une image, comprenant les étapes consistant à :

   capturer une image par un capteur de capture,
   traiter l'image capturée conformément au procédé de traitement d'image selon la revendication 11 pour acquérir une image corrigée, dans lequel le capteur cible est le capteur pour lequel a été entraîné un module de traitement d'image,
   appliquer un traitement d'image à l'image corrigée par le module de traitement d'image entraîné,
   appliquer une relation inverse de la relation de mappage pour générer une image traitée ou appliquer une relation inverse de la relation de mappage à un résultat d'équilibrage des blancs automatique, dit AWB, qui est utilisé pour calculer les gains d'équilibrage des blancs pour corriger l'image capturée.

14. Appareil comprenant un processeur et une mémoire, dans lequel la mémoire maintient des instructions qui, lorsqu'elles sont exécutées par le processeur, mettent en œuvre les étapes du procédé selon l'une quelconque des revendications 1 à 13.

EP 4 325 880 B1

Providing a plurality of color patch spectral reflectances $R_i(\lambda)$, $i = 1...c$, and a plurality of illuminant power spectrum distributions $I_j(\lambda)$, $j = 1...L$, where $\lambda$ denotes the wavelength of light

S01

Providing capture sensor channel spectral sensitivities $S_{R,c}(\lambda)$, $S_{G,c}(\lambda)$ and $S_{B,c}(\lambda)$

S02

Providing target sensor channel spectral sensitivities $S_{R,t}(\lambda)$, $S_{G,t}(\lambda)$ and $S_{B,t}(\lambda)$

S03

Determining from the color patch spectral reflectances $R_i(\lambda)$, the illuminant power spectrum distributions $I_j(\lambda)$ and the capture sensor channel spectral sensitivities $S_{R,c}(\lambda)$, $S_{G,c}$ and $S_{B,c}(\lambda)$ capture sensor color channel responses $[R_c, G_c, B_c]_K$, $k = 1...K$

S04

Determining the mapping relation from the color patch spectral reflectances $R_i(\lambda)$, the illuminant power spectrum distributions $I_j(\lambda)$ and the target sensor channel spectral sensitivities $S_{R,t}(\lambda)$, $S_{G,t}$ and $S_{B,t}(\lambda)$ and target sensor color channel responses $[R_t, G_t, B_t]_K$, $k = 1...K$; wherein the mapping relation comprises a plurality of mapping functions; and wherein each mapping function is determined by a mapping from the capture sensor color channel responses $[R_c, G_c, B_c]_K$ to the target sensor color channel responses $[R_t, G_t, B_t]_K$, $k = 1...K$

S05

# Fig. 1

```
┌────────────────────────────────────┐
│ Providing an initial image having a │ ⟋ S11
│ plurality of pixels, wherein each   │
│ pixel comprises a color information,│
│ wherein the initial image is        │
│ captured by a capture sensor        │
└────────────────────────────────────┘
                  │
                  ▼
┌────────────────────────────────────┐
│ Providing a mapping relation        │ ⟋ S12
│ including a plurality of mapping     │
│ functions                           │
└────────────────────────────────────┘
                  │
                  ▼
┌────────────────────────────────────┐
│ Selecting for each pixel a mapping  │ ⟋ S13
│ function according to the color     │
│ information of the respective pixel │
└────────────────────────────────────┘
                  │
                  ▼
┌────────────────────────────────────┐
│ Applying the respective mapping     │ ⟋ S14
│ function to each of the pixel to    │
│ generate a mapped image             │
└────────────────────────────────────┘
```

Fig. 2

$B_c/G_c$

$CTM_{M-1,0}$

$CTM_{M-1,N-1}$

12

10

$CTM_{2,0}$ $CTM_{2,1}$ $CTM_{2,2}$

$CTM_{1,0}$ $CTM_{1,1}$ $CTM_{1,2}$

colors used to estimate $CTM_{m,n}$

$\Delta_{tile}$

$CTM_{0,0}$ $CTM_{0,1}$ $CTM_{0,2}$

$CTM_{0,N-1}$

$R_c/G_c$

$\Delta_{tile}$

Fig. 3

Image pixel statistics in the capture sensor space

$[R_c, G_c, B_c]_i$

Transform $i$-th triplet from the statistics

$[R'_t, G'_t, B'_t]_i = [R_c, G_c, B_c]_i \cdot CTM_{m,n}$

Lightness normalization

$[R_c/G_c, B_c/G_c]_i$

Identify CTM index

$[m, n] = floor\left(\left[\frac{R_c}{G_c}, \frac{B_c}{G_c}\right]/\Delta_{tile}\right)$

$CTM_{m,n}$

Transformed $[R'_t, G'_t, B'_t]_i$ in the target sensor space

AI-based AWB Algorithm

Fig. 4

EP 4 325 880 B1

Fig. 5A

Fig. 5B

Fig. 5C

Color patch
spectral
reflectances
$R_i(\lambda)$

Illuminants
spectrum
$I_j(\lambda)$

Illuminate $i$-th patch $R_i(\lambda)$
with $j$-th illuminant $I_j(\lambda)$:
$P_k(\lambda) = R_i(\lambda).I_j(\lambda),\ k = 1 \dots K$

Illuminated
patches
spectra
$P_k(\lambda)$

Calculate R, G and B channel
response in the in the capture
sensor space from channel
spectrum sensitivities
$S_{R,c}(\lambda), S_{G,c}(\lambda)$ and $S_{B,c}(\lambda)$:

$$[R_c, G_c, B_c]_k = \begin{bmatrix} \int S_{R,c}(\lambda).P_k(\lambda)d\lambda, \\ \int S_{G,c}(\lambda).P_k(\lambda)d\lambda, \\ \int S_{B,c}(\lambda).P_k(\lambda)d\lambda \end{bmatrix}$$

$[R_c, G_c, B_c]_k, k = 1 \dots K$

Calculate R, G and B channel
response in the in the target
sensor space from channel
spectrum sensitivities
$S_{R,t}(\lambda), S_{G,t}(\lambda)$ and $S_{B,t}(\lambda)$:

$$[R_t, G_t, B_t]_k = \begin{bmatrix} \int S_{R,t}(\lambda).P_k(\lambda)d\lambda, \\ \int S_{G,t}(\lambda).P_k(\lambda)d\lambda, \\ \int S_{B,t}(\lambda).P_k(\lambda)d\lambda \end{bmatrix}$$

$[R_t, G_t, B_t]_k, k = 1 \dots K$

Fig. 6

EP 4 325 880 B1

Fig. 7

Tiled local multi-CTM          Global CTM

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAO-BING GAO** ; **MING ZHANG** ; **CHAO-YI LI** ; **YONG-JIE LI**. Improving color constancy by discounting the variation of camera spectral sensitivity. *Journal of the Optical Society of America A*, 2017, vol. 34 (8), 1448
- **MAHMOUD AFIFI** ; **MICHAEL S. BROWN**. Sensor-Independent Illumination Estimation for DNN Models. *British Machine Vision Conference*, 2019
- **RANG NGUYEN** ; **DILIP K. PRASAD** ; **MICHAEL S. BROWN**. Raw-to-raw: Mapping between image sensor color responses. *IEEE Computer Vision and Pattern Recognition*, 2014
- **HAKKI CAN KARAIMER** ; **MICHAEL S. BROWN**. Improving color reproduction accuracy on cameras. *IEEE Computer Vision and Pattern Recognition*, June 2018
- **SAMU KOSKINEN** ; **DAN YANG** ; **JONI-KRISTIAN KAMARAINEN**. Cross-dataset Color Constancy Revisited Using Sensor-to-Sensor Transfer. *British Machine Vision Conference*, September 2020